# EUROPEAN PATENT SPECIFICATION

(11) **EP 4 559 362 B1**
(45) Date of publication and mention of the grant of the patent: **18.11.2026**
(21) Application number: 25169763.7
(22) Date of filing: 18.09.2023
(51) Int. Cl.: F24C 15/04, F24C 15/02, F24C 15/14, A47J 37/04, A47J 36/38, A47J 27/04

(54) **COOKING APPLIANCE**
KOCHVORRICHTUNG
APPAREIL DE CUISSON

(30) Priority: 23.09.2022 KR 20220120531
(43) Date of publication of application: 28.05.2025
(62) Document number(s) of the earlier application(s) in accordance with Art. 76 EPC: 23197882.6 / 4 343 210
(73) Proprietor: LG Electronics Inc., Yeongdeungpo-gu Seoul 07336 (KR)
(72) Inventor: YOO, Junhee, Seoul 08592 (KR)
(74) Representative: Ter Meer und Partner mbB

(56) References cited:
- EP-A1- 1 918 644
- WO-A1-2018/108484
- WO-A1-2022/017794
- DE-A1- 102005 037 020
- DE-A1- 102016 224 305

## Description

The present application claims priority to Korean Patent Application No. 10-2022-0120531, filed September 23, 2022.

### BACKGROUND OF THE INVENTION

### Field of the Invention

The present invention relates to a cooking appliance.

### Description of the Related Art

Various types of cooking appliances are used to heat food at home or in restaurants. For example, various cooking appliances such as microwave ovens, induction heating electric ranges, and grill heaters are used.

When classifying the cooking appliance according to a shape of cooking chamber in which food is cooked, the cooking appliance may be classified into an open type cooking appliance and a sealed type cooking appliance. The sealed type cooking appliance includes an oven, a microwave oven, etc. having a door, and the open type cooking appliance includes a cooktop, a hob, etc.

Recently, as the sealed type cooking appliance, a steam oven has been used. The steam oven refers to an oven equipped with a function of injecting high temperature steam into a cooking chamber and controlling humidity of food using the steam. The steam oven can prevent food from drying out and maintain the taste and the aroma of the food.

The steam oven includes a steam supply apparatus to supply steam. The steam supply apparatus includes a steam generator generating steam, and a water tank supplying water to the steam generator. Water injected from the water tank passes through a water supply tube flows into the steam generator, and the water flowing into the steam generator is heated by a heater of the steam generator to generate steam. As described above, the generated steam flows into a cooking chamber and is circulated in the cooking chamber, and in this process, cooking using steam is performed.

After cooking, when a door is opened, high-temperature steam present inside the cooking chamber is brought into contact with outside air. Furthermore, due to a temperature difference between the inside space and the outside space of the cooking chamber, dew condensation may occur on an inner surface of the door. Water droplets generated on the inner surface of the door fall along the inner surface of the door. The falling water droplets may be transferred to a lower frame constituting a casing of the steam oven, and the water collected in the lower frame may be evaporated.

However, during an opening process of the door, water droplets may fall to the floor without being transferred to the lower frame. When the door is rotated, a gap between the door and the lower frame widens and water falls therebetween. In this case, the surroundings of the steam oven become dirty and hygiene thereof is deteriorated, which is a problem.

In order to solve this problem, Korean Patent No. 10-1359463 (related art 1) discloses an oven in which a water tray is provided at a lower portion of a door to store falling water and a buffer tank is provided at a main body of the oven to receive the water from the water tray. Furthermore, Korean Patent No. 10-0563732 (related art 2) discloses an oven in which a drain rail part is provided at a lower portion of a door and a discharge rail part is provided at a main body to receive water from the drain rail part.

In both of the related art 1 and the related art 2, the oven requires a separate water tray structure at the door, and the number of components of the door increases, which is a disadvantage. Specifically, since a separate structure (discharge pipe and connection pipe) to transfer water from the water tray to a water reservoir part (buffer tank and discharge rail part) at the main body is required, the structure of the door becomes more complex.

Furthermore, in the related art 1 and the related art 2, the water tray at the door has a structure that can store water. Therefore, water remaining in the water tray without being transferred to the main body may cause bad odors and deteriorate hygiene.

Meanwhile, the door of the conventional steam oven is composed of glass for seeing through the cooking chamber, and a door frame coupled to the glass. The door frame may have an approximate square frame shape in which a plurality of components is assembled with each other, and the plurality of components may be assembled with each other by fasteners such as screws. When assembly of the components is performed using screws, the number of components and the number of man-hours increase. Furthermore, the number of man-hours for disassembling the door frame inevitably increases.

Moreover, when screws made of metal are in continuous contact with water flowing along the inner surface of the door, the screws are easily rusted, which is a problem.

EP 1 918 644 A1 presents a door having an inner side facing the cooking area. A collecting device for the fluid has a longitudinal extension and is attached to the inner side. The door is rotatable around an axis, which runs horizontally or vertically. The collecting device partially delivers the accommodated fluid during closing of the door into the collecting unit. The plate rests in the door against a seal of the cooking area.

WO 2018/108484 A1 relates to a household cooking appliance, having a cooking chamber and a door for closing the cooking chamber, wherein the door has two door profiled elements arranged at a distance from each other and an inner pane fastened to the door profiled elements and a condensate strip arranged between the door profiled elements, which condensate strip is designed to lead away liquid that has condensed on the inner pane, wherein each door profiled element has an interface, by means of which the condensate strip is detachably connected to the door profiled elements.

WO 2022/017794 A1 relates to a door for a domestic cooking device, comprising an outer pane, an inner pane, a condensate collecting strip which is provided on a lower edge of the door for collecting a liquid that condenses on the inner pane, and a seal element which is at least partly arranged in a gap provided between the outer pane and the inner pane, wherein the seal element is solely connected to the condensate collecting strip.

DE 10 2016 224305 A1 relates to a door for a cooking appliance, with a door leaf, and with a condensate collection device for collecting draining condensate, which is arranged on the door, wherein an elastic seal for application to a component of the cooking appliance is arranged on the condensate collection device.

### SUMMARY OF THE INVENTION

The present disclosure has been made keeping in mind the above problems occurring in the related arts, due to the condensate formation on a rear surface of a door of a cooking appliance.

Such condensate requires to be managed and damage caused by such condensate to the door parts or surroundings is thus reduced.

An object of the present disclosure is to provide a simple way/technique to prevent and/or manage and/or dispose-off water generated due to dew condensation with a simple structure/design for example without adding a separate water tray at a lower portion of the door of a cooking appliance.

The above object is further enhanced by providing a door assembly which allows reduced usage of conventional fastening structures - such as bolts, screws, nuts, etc - which may be susceptible to damage e.g. rusting due to condensate.

The present disclosure has been made keeping in mind the above problems occurring in the related arts, and an object of the present disclosure is to provide a simple way/technique to prevent and/or manage and/or dispose-off water generated due to dew condensation with a simple structure/design for example without adding a separate water tray at a lower portion of the door of a cooking appliance.

The present disclosure has been made keeping in mind the above problems occurring in the related arts, and an object of the present disclosure is to provide a simple way/technique to prevent and/or manage and/or dispose-off water generated due to dew condensation with a simple structure/design for example without adding a separate water tray at a lower portion of the door of a cooking appliance.

Another object of the present technique is to transfer water generated due to dew condensation to a main body of a household appliance along a frame of a door with a simple structure/design, for example without adding a separate water tray at a lower portion of the door a cooking appliance.

Yet another object of the present disclosure is to prevent water generated due to dew condensation from being collected in a lower portion of a door.

Yet another object of the present disclosure is to provide a simple assembly for a door of a cooking appliance for example to assemble a lower frame, among door frames constituting a door, to side frames by a catching structure without separate fasteners.

The invention is set out by the features of the independent claim. The invention is defined only be the features of the independent claim

According to a first aspect of the present invention, a cooking appliance is provided. The cooking appliance includes a casing including a cavity therein, and a door opening and closing the cavity. The door includes a panel part or a transparent part (which may also be referred to as transparent panel part) through which the cavity is seen, and a door frame coupled to the transparent part. The door frame includes side frames, may include an upper frame, and includes a lower frame. A drainage guide is provided between opposite ends of the lower frame, and the drainage guide extends to be inclined towards a lower portion of a front surface of the casing. Thus, the lower frame may not only support the transparent part but also guide discharge of water due to dew condensation. The panel part may not be transparent. Alternatively, the panel part may be transparent and then referred to as the transparent part or the transparent panel part.

According to some embodiments of the invention, the door may comprise: a panel part or a transparent part through which inside space of the cavity is seen; and a door frame coupled to the transparent part, and comprising side frames, an upper frame, and a lower frame. Opposite ends of the lower frame are respectively assembled to a pair of side frames. A drainage guide is provided between the opposite ends of the lower frame and the drainage guide extends to be inclined towards a lower portion of a front surface of the casing. The panel part may not be transparent. Alternatively, the panel part may be transparent and then referred to as the transparent part or the transparent panel part.

According to the invention, the cooking appliance comprises a casing having a cavity defined or formed therein The cavity has an open front side. The casing has a front surface surrounding or circumscribing or defining the open front side of the cavity. A door is disposed in front of the casing and/or in front of the front surface of the casing. The door is configured to be movable or manipulatable or rotatable between an open position of the door and a closed position of the door for opening and closing the cavity, respectively or for opening and closing the open front side of the cavity. The door comprises a door frame and a panel part supported by the door frame. Optionally, the door frame may surround or circumscribe the panel part. Optionally the panel part may be a transparent panel. The panel part comprises a rear surface configured to be disposed at the open front side of the cavity for closing the cavity when the door is in the closed position. The rear surface of the panel part may be in direct contact with the cavity. The door frame comprises a pair of side frames and comprises a lower frame. The side frames are spaced apart from each other and face each other and the lower frame is disposed thereinbetween, and opposite ends of the lower frame are respectively assembled to or coupled to one side frame and the other side frame of the pair of side frames. The lower frame includes a drainage guide provided between the opposite ends of the lower frame and below the rear surface of the panel part. The drainage guide extends towards the front surface of the casing and is inclined towards a lower portion of the front surface of the casing or is inclined downward towards a lower portion of the front surface of the casing or a lower portion of the casing.

The drainage guide may be configured to allow drainage of any fluid which may collect/condense on the rear surface of the panel part during operation of the household appliance, for example during a cooking process performed by the cooking appliance or, according to an aspect not covered by the claims, a dishwashing process performed by a dishwasher or a drying process by a laundry machine.

The drainage guide may be configured to allow drainage of any condensate formed on the rear surface of the panel part, for example during operation of the household appliance.

The cooking appliance may include a steam generating module or a steam (generating) device. The steam device may generate and supply steam to the cavity during operation of the household appliance. The steam device may include a heater for heating water and a water tank for supplying water to be heated by the heater thereby generating steam to be supplied to the cavity during an operation of the household appliance. In such case, the steam supplied to the cavity may condense on the rear surface of the panel part or the transparent panel.

Alternatively, the cooking appliance may not include a steam generating module or a steam (generating) device. Nevertheless, steam or moisture may be generated in the cavity during operation of the household appliance, for example for the cooking appliance by being released from the food/item being cooked or processed in the appliance. In such case, the steam generated in the cavity or moisture in the cavity may condense on the rear surface of the panel part or the transparent panel.

The condensate (fluid condensed as a result of steam or moisture) may form or be collected on the rear surface of the panel part or the transparent panel.

In the present disclosure the transparent panel part has been used as an example of the panel part, however the panel part is not limited to being transparent.

The drainage guide is below the rear surface of the panel part with respect to an up-down direction of the appliance/casing.

The drainage guide may be spaced apart from the rear surface of the panel part a below a lowermost end of the rear surface of the panel part, for example along a vertical straight line or plane.

The drainage guide may be moveable along with a movement of the door.

The drainage guide may be moveable along with the movement of the door such that when the door is in the closed position, the drainage guide is farther from the front surface of the casing than the rear surface of the panel part is from the front surface of the casing.

The drainage guide may be moveable along with the movement of the door, such that when the door is in the open position, the drainage guide is vertically below, or is moved to a position vertically below, the rear surface of the panel part or vertically below a lowermost end of the rear surface of the panel part, for example along a vertical straight line or plane. The lower frame is slidingly coupled to the side frames. One end of the lower frame may go over a catching step of each of the side frames to be caught by a fixing end of the catching step to be fixed. The lower frame can be assembled to the side frames by a catching structure without separate fasteners.

A frame assembly provided at one end of the lower frame may be moved along a surface of each of the side frames. The catching step may be disposed in each of the side frames, on a moving path of the frame assembly. When the frame assembly is elastically deformed and recovered in a or during a process of going over the catching step, the frame assembly may be caught by and/or fixed to a fixing end of the catching step.

The transparent part may be composed of a plurality of panels stacked with each other, and the lower frame may support lower portions of some panels among the plurality of panels.

The lower frame includes a moving guide spaced apart from the frame assembly, and the moving guide is moved in a constant path along a guide channel formed in each of the side frames.

Each of the frame assembly and the moving guide may have a cantilever structure protruding on one end portion of the lower frame.

The lower frame may be moved in a first direction to be brought into close contact with a surface of each of the side frames, and may go over the catching step provided at each of the side frames while being moved in a second direction different from the first direction to be caught by a fixing end of the catching step. Since the lower frame is assembled to the side frames in the different directions, arbitrary separation of the lower frame may be prevented without separate fasteners.

A protruding height of the catching step may gradually increase in the second direction.

A guide channel is formed in each of the side frames in the second direction, and a moving guide of the lower frame may slide in the guide channel in the second direction.

The guide channel may have a channel entrance into which the moving guide may be inserted, and the channel entrance may be open in the first direction.

The moving guide may protrude longer in a left-right width direction of the lower frame than the frame assembly.

Based on a height direction of the door, the frame assembly (or the frame assembly caught by the catching step) and the moving guide may be different from each other in height.

Each of the side frames may have a side fence, and the guide channel may be formed between a surface of each of the side frames and the side fence

A rearmost panel among the plurality of panels may be in close contact with a surface of the side fence, and the channel entrance into which a last end of the moving guide is inserted may be formed in the side fence

The side fence and another side fence may be disposed to face each other at the pair of side frames, and a distance between the moving guide and another moving guide that are provided at the opposite ends of the lower frame may be larger than a width between ends of the pair of side fences

A distance between the frame assembly and another frame assembly that are respectively provided at the opposite ends of the lower frame may be less than or equal to a width between the ends of the pair of side fences facing each other.

Each of the side frames may include a front board to which a rear surface of a front panel may be coupled, the front panel may be disposed at the foremost side among the plurality of panels for example constituting the transparent part, and a side fence spaced apart from the front board. A rear panel, e.g. disposed at the rearmost side among the plurality of panels, may be coupled to the side fence. For example a front surface of a rear panel disposed at the rearmost side among the plurality of panels may be coupled to the side fence. An inner panel disposed between the front panel and the rear panel among the plurality of panels may be disposed between the front board and the side fence.

The catching step by which one end portion of the lower frame is caught may protrude on a rear surface of each of the side frames, which is opposite to a front surface of each of the side frames coupled to the front panel.

The lower frame may include a frame assembly in which a frame assembly hole is open, and when the lower frame is moved relatively to each of the side frames, an assembly protrusion of each of the side frames may be mounted to the frame assembly hole.

The frame assembly may be provided at each of the opposite ends of the lower frame, and the drainage guide may be disposed between a pair of frame assemblies.

When the door is closed, among the plurality of panels constituting the transparent part, the rear panel disposed at the rearmost side may be disposed closer to a front surface of the casing than a last end of the drainage guide, and when the door is opened, the last end of the drainage guide may be disposed closer to the front surface of the casing than the rear panel. When the drainage guide further protrudes towards the front surface of the casing, water flowing along the inner surface of the door may be prevented from falling to the floor, and may be transferred to the lower portion of the front surface of the casing through the drainage guide.

When the door is closed, the last end of the drainage guide may be formed to have an inclination gentler than an inclination of an upper end portion of the drainage guide.

A plurality of panel guides may be disposed at intervals in each of the side frames, and some panels among the plurality of panels constituting the transparent part may be disposed between the panel guides.

A panel support may be provided at a lower portion of each of the side frames to support lower ends of some panels among the plurality of panels, and the panel support may be formed stepwise to have difference heights based on a height direction of the door.

The cooking appliance according to the present disclosure, may have one or more of the following effects.

The drainage guide provides efficient condensate management reducing the adverse effects of condensate

The assembly structure, in addition to or independently of the drainage guide, for the door reduces the adverse effects of condensate. When present in addition to the drainage guide the assembly structure further enhances the reduction in adverse effects of the condensate.

The lower frame supporting the transparent part (glass, etc.) may be disposed at the lower portion of the door, and the drainage guide may be provided at the lower frame. When water generated due to dew condensation flows downwards along the surface of the door, the water can be discharged to the lower portion of the main body (casing) of the cooking appliance along the drainage guide. As described above, the lower frame can not only support the transparent part but also guide discharge of the water generated due to dew condensation. Therefore, without adding a separate water tray at the lower portion of the door, the water can be discharged towards the casing, so that the water discharge structure of the cooking appliance can be simplified and the number of components can be reduced.

Furthermore, the drainage guide may only guide the water towards the bottom of the casing with the inclination structure, but does not form a space in which the water can be collected. Therefore, since the water is not be collected in the lower portion of the door, the hygiene of the household appliance can be improved.

Furthermore, the lower frame among the door frames constituting the door may be caught by and fixed to the side frames while sliding. In other words, the lower frame can be assembled to the side frames by the catching structure without separate fasteners. Therefore, the number of man-hours and the number of components for assembling the door are reduced, and the assembly of the door can be improved.

Furthermore, since the lower frame may be assembled to the side frames in the catching structure, the lower frame can be separated from the door without unfastening fasteners. Therefore, the maintainability of the lower frame can be improved.

Furthermore, the lower frame may be moved in the first direction to be brought into close contact with the side frames, and then may be moved in the second direction different from the first direction to be caught by and fixed to the side frames. As described above, the lower frame may be assembled to the side frames in the two different directions, arbitrary separation of the lower frame can be prevented without separate fasteners.

Furthermore, the lower frame may include the moving guide, and the moving guide may be moved in a constant direction along the guide channel formed in each of the side frames. The moving guide may guide an assembling direction of the lower frame when the lower frame is assembled to each of the side frames. Therefore, assembly between the lower frame and the side frames can be easily performed.

The moving guide may be supported by one portion of each of the side frames. A first portion of the lower frame may be coupled to each of the side frames in the catching structure, and a second portion of the lower frame may be supported by each of the side frames by the moving guide, so that a coupling force between the lower frame and the side frames can increase and a gap therebetween can be reduced

Furthermore, when the door is opened, the drainage guide of the lower frame may protrude towards the front surface of the casing more than other parts of the door. When the drainage guide further protrudes towards the front surface of the casing, water flowing along the inner surface of the door is prevented from falling to the floor, and can be transferred to the lower portion of the front surface of the casing through the drainage guide. Therefore, when the door is opened, water falling to the surroundings of the cooking appliance can be prevented.

### BRIEF DESCRIPTION OF THE DRAWINGS

FIG. 1 is a perspective view showing an exemplary embodiment of a cooking appliance according to the present disclosure installed in a built-in method.
FIG. 2 is a perspective view showing a structure of the cooking appliance according to the present disclosure.
FIG. 3 is a perspective view showing the structure of the cooking appliance according to the present disclosure, at a different angle from an angle of FIG. 2.
FIG. 4 is a perspective view showing an opened state of a panel unit of the cooking appliance according to the present disclosure.
FIG. 5 is a perspective view showing a water tank of the cooking appliance according to the present disclosure, the water tank being shown as taken out from the cooking appliance.
FIG. 6 is a sectional view taken along line VI-VI' in FIG. 1.
FIG. 7 is a sectional view taken along line VII-VII' in FIG. 1.
FIG. 8 is a sectional view taken along line VIII-VIII' of FIG. 2.
FIG. 9 is an exploded-perspective view showing components of the cooking appliance according to the present disclosure.
FIG. 10 is a perspective view showing a structure of a door of the cooking appliance according to the present disclosure.
FIG. 11 is a perspective view showing the structure of the door of the cooking appliance according to the present disclosure, at a different angle from an angle of FIG. 9.
FIG. 12 is a perspective view showing a lower structure of the door of the cooking appliance according to the present disclosure.
FIG. 13 is a perspective view showing an assembled state of a side frames and a lower frame of the cooking appliance according to the present disclosure.
FIG. 14 is a perspective view showing a lower structure of a side frame of the cooking appliance according to the present disclosure.
FIG. 15 is a perspective view showing a lower structure of a lower frame of the cooking appliance according to the present disclosure.
FIG. 16 is a perspective view showing a partial structure of another embodiment of the lower frame according to the present disclosure.
FIG. 17 is a perspective view showing a partial structure of another embodiment of the lower frame according to the present disclosure.
FIGS. 18 to 20 are assembly sequence views sequentially showing a process of assembling the lower frame to the side frame of the cooking appliance according to the present disclosure.

### DETAILED DESCRIPTION OF THE DISCLOSURE

Hereinbelow, exemplary embodiments of the present disclosure will be described in detail with reference to accompanying drawings. Wherever possible, the same reference numerals will be used throughout the drawings and the description to refer to the same or like elements or parts.

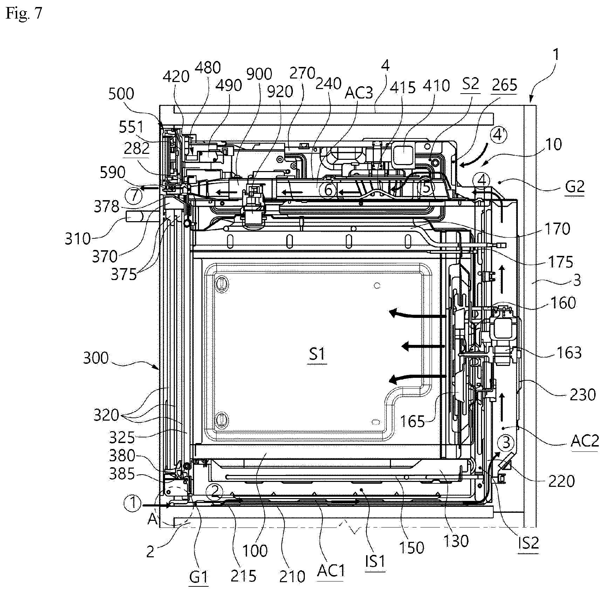

Although the invention is described with reference to the present cooking appliance, it is understood that the invention may also be applied to other household appliances, such as dishwashers, laundry treatment apparatuses, or dryers. However, such applications do not form part of the subject matter of the present claims. A cooking appliance of the present disclosure is provided to cook food to be cooked (hereinbelow, which will be referred to as 'food') using one heat source or a plurality of heat sources. The cooking appliance of the present disclosure may include a first heat source module 150 (referring to FIG. 7), a second heat source module 160 (referring to FIG. 7), and a third heat source module 170 (referring to FIG. 7). The first heat source module 150, the second heat source module 160, and the third heat source module 170 may be respectively arranged in the cooking appliance of the present disclosure, and may consist of different types of heat sources. However, one or more of the first heat source module 150, the second heat source module 160, and the third heat source module 170 may be omitted.

The cooking appliance of the present disclosure may include a steam device. The steam device may supply steam to a cavity S1 that is a cooking chamber provided inside the cooking appliance. To this end, the steam device may include a heater (not shown) for heating water, and a water tank 450 for supplying water to be heated by the heater.

Steam present inside the cavity S1 may generate dew condensation on a surface of the door 300 when the door 300 is opened. More specifically, dew condensation is generated on an inner surface of the door 300 and the surface facing the cavity S1, and water flows downwards along the surface of the door. In the present disclosure, the water may be transferred to a specific location in a lower portion of the casing 100, 200 without falling to the floor around the cooking appliance. This structure will be described in detail below

In addition, the cooking appliance of the present disclosure may include a panel unit 500. The panel unit 500 may include at least either of an input means from which a signal for operating the cooking appliance is input, and an output means displaying a cooking state of the cooking appliance.

In the cooking appliance of the present disclosure, each of the panel unit 500 and the water tank 450 may be disposed at a front portion of the cooking appliance. The panel unit 500 may cover or open an entrance of the water tank 450 by being moved.

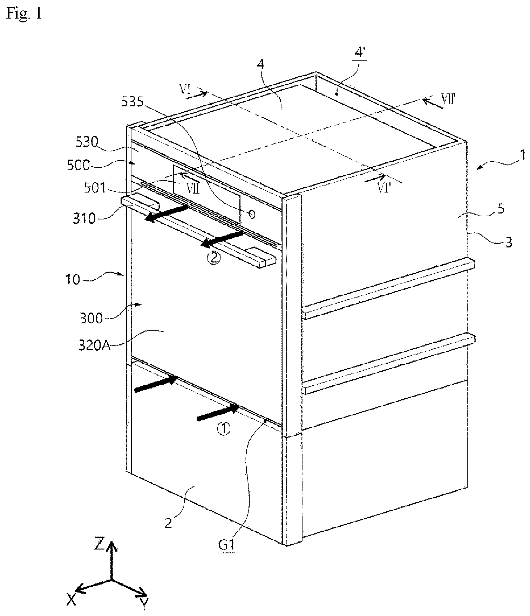

FIG. 1 is a view showing an exemplary embodiment of a cooking appliance according to the present disclosure installed in a built-in method. As shown in FIG. 1, the cooking appliance of the embodiment may be installed to a kitchen system 1, etc. and only a front surface of the cooking appliance may be exposed forward. A door 300 and the panel unit 500, which will be described below, may be included at the front surface of the cooking appliance. The water tank 450 of the embodiment may be exposed to the front surface of the cooking appliance, but is shown as being covered by the panel unit 500 in FIG. 1. Reference numeral 501 indicates a display unit exposed to the front surface of the panel unit 500.

For example, in FIG. 1, arrow X indicates a front-rear direction, arrow Y indicates a left-right direction, and arrow Z indicates an up-down direction. At this point, the front-rear direction may be a depth direction of the cooking appliance, the left-right direction may be a width direction of the cooking appliance, and the up-down direction may be a height direction of the cooking appliance. Hereinbelow, these terms will be used when indicating directions.

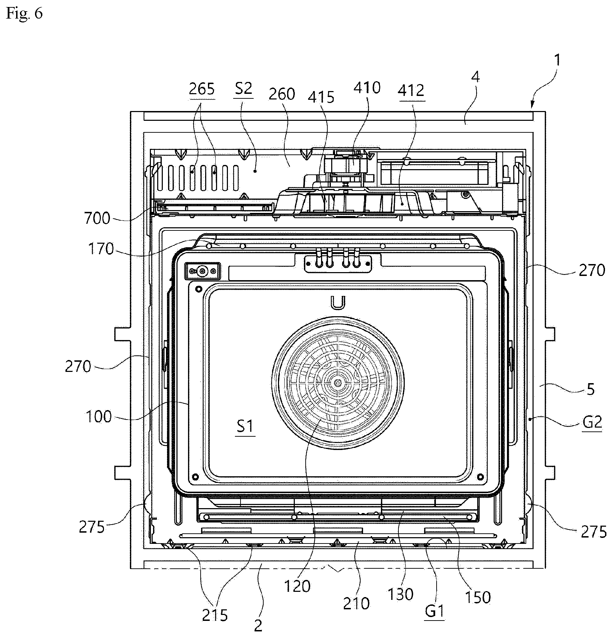

Briefly describing a structure of the kitchen system 1, the kitchen system 1 may surround a lower surface, a rear surface, an upper surface, and side surfaces of the cooking appliance, except for the front surface of the cooking appliance. The kitchen system 1 may include a lower surface 2 (referring to FIG. 6), a rear surface part 3, an upper surface part 4, and a side surface part 5. The lower surface part 2, the rear surface part 3, the upper surface part 4, and the side surface part 5 cover a lower surface, a rear surface, an upper surface, side surfaces of the cooking appliance, respectively, and only the front surface of the cooking appliance may be exposed outwards. As another example, some of the lower surface part 2, the rear surface part 3, the upper surface part 4, the side surface part 5 may be omitted.

A gap may exist between the kitchen system 1 and the cooking appliance. External air may flow into the gap (lower intake port G1) between the kitchen system 1 and the cooking appliance. As shown in FIG. 1, air may flow into the gap between the kitchen system 1 and the lower portion of the cooking appliance (direction of arrow ①). Furthermore, the air cooling the cooking appliance while passing through the inside space of the cooking appliance may be discharged forwards again. More specifically, the air may be discharged through a gap formed between the door 300 and the panel unit 500 of the cooking appliance (direction of arrow ②). This circulation process of air will be described again below.

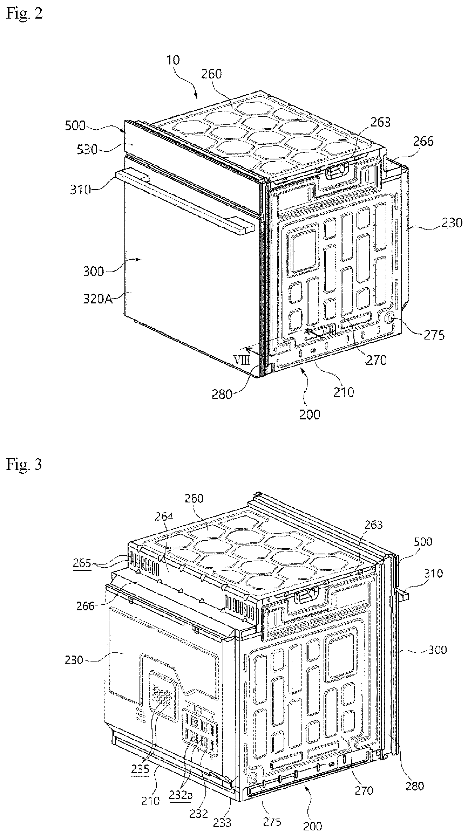

As shown in FIG. 2, the view shows the embodiment of the cooking appliance according to the present disclosure. As shown in the drawing, the cooking appliance may be shaped as an approximate hexahedron. A front-rear length, a left-right length, and a vertical height of the cooking appliance may be formed in approximate similar sizes. On the other hand, the front-rear length, the left-right length, and the vertical height of the cooking appliance may be formed in different sizes.

The cavity S1 (referring to FIG. 6) is provided inside the cooking appliance. The cavity S1 may be formed inside a casing 100, 200 forming a frame of the cooking appliance. The cavity S1 may be an empty space in which an object to be cooked, and may be understood as a cooking chamber. The cavity S1 may be divided from the electric chamber S2 (referring to FIGS. 6 and 7) which will be described below.

The casing 100, 200 may include an inner casing 100 (referring to FIGS. 6 and 7) and an outer casing 200. The outer casing 200 may be coupled to the inner casing 100 in a shape of surrounding the inner casing 100. An insulator (not shown) may be filled between the inner casing 100 and the outer casing 200, and the insulator may serve to block heat of each heat source module transmitted outwards.

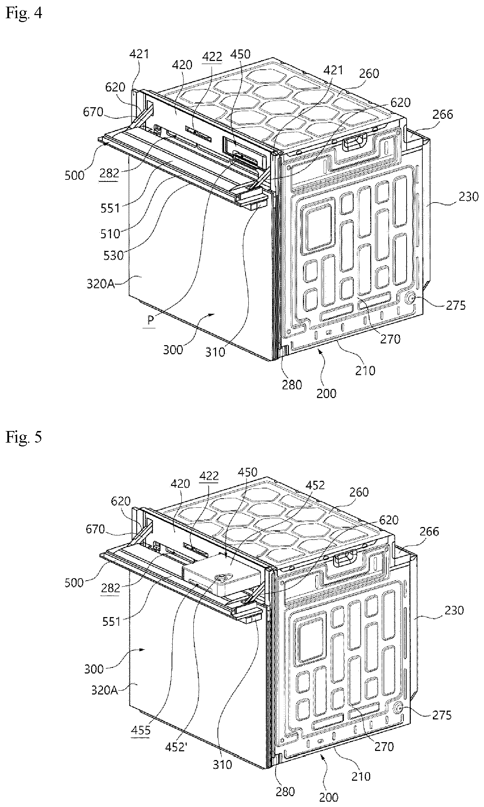

As shown in FIG. 4, the panel unit 500 is shown as an opened state. In the embodiment, the panel unit 500 may be rotated such that an upper end of the panel unit 500 is moved downwards. In other words, the panel unit 500 may be operated in a kind of pull-down method in which the upper end thereof is rotated upwards and downwards on a lower end thereof.

Next, as shown in FIG. 5, the water tank 450 is ejected out while the panel unit 500 is opened. In the embodiment, the water tank 450 for a steam effect is disposed in rear of the panel unit 500 in an operational state of the cooking appliance so as to be covered by the panel unit 500. When the water tank 450 is ejected or inserted again, the panel unit 500 should be opened to open an entrance of a tank chamber. The operational state means a state in which the cooking appliance is operated, i.e., a state in which an object to be cooked is cooked.

As described above, in the embodiment, the panel unit 500 may be disposed in front of the water tank 450 at all times except for ejecting and inserting processes of the water tank 450. The panel unit 500 disposed in front of the water tank 450 may cover the entrance of the water tank 450, more specifically, an entrance of the tank chamber to be described below. As such, the water tank 450 and the entrance are prevented from being exposed outwards, and sense of beauty of the cooking appliance may be improved.

As another example, the panel unit 500 may not be disposed in front of the water tank 450. The entire length of the panel unit 500 is reduced not to block the entrance of the water tank 450, or the panel unit 500 may be disposed at a different height from the entrance of the water tank 450.

As shown in FIG. 6, the cooking appliance stored in the kitchen system 1 is shown. The cavity S1 may be provided in the inner casing 100. It may be understood that the empty space of the cavity S1 is defined by the inner casing 100. The inner casing 100 may be shaped as an approximate hexahedron, and may be open forwards.

A rear surface of the inner casing 100 may have an opening 120. The opening 120 serves to transmit heat generated from the second heat source module 160 into the cavity S1. The opening 120 may be formed by penetrating a part of the rear surface of the inner casing 100. In the embodiment, the opening 120 is shaped as an approximate circular shape.

Steam may flow into the cavity S1 through the opening 120. The steam is generated by the steam device. As shown in FIG. 7, the steam may flow into the cavity S1 a convection fan provided in the second heat source module 160.

As shown in FIGS. 6 and 7, a lower frame 130 may be provided at a lower portion of the inner casing 100. The lower frame 130 may protrude downwards more than a bottom surface of the inner casing 100. The first heat source module 150 may be disposed inside the lower frame 130. The lower frame 130 may be disposed at an upper portion of a bottom casing 210 to be described below. A first insulating space IS1 is formed between the lower frame 130 and the bottom casing 210, and the first insulating space IS1 is filled with an insulator (not shown), so that heat of the first heat source module 150 is prevented from being discharged outwards.

In the embodiment, a plurality of heat sources may be included. The heat sources may include the first heat source module 150, the second heat source module 160, and the third heat source module 170. The first heat source module 150 is disposed at a lower surface of the cavity S1, the second heat source module 160 is disposed at a rear surface of the cavity S1, and the third heat source module 170 may be disposed at an upper surface of the cavity S1. As described above, the multiple heat sources are disposed at difference positions, so that a surface of an object to be cooked may be heated more evenly, and cooking time may be reduced. Furthermore, when the plurality of heat sources is used, a cooking method that requires high temperature can be implemented.

Referring to FIGS. 6 and 7, the first heat source module 150 may be disposed in the lower frame 130 of the inner casing 100. The first heat source module 150 may emit radiant heat into the cavity S1. To this end, the first heat source module 150 may include a heater. The heater may emit radiant heat upwards, i.e., towards the cavity S1, and may heat a lower portion of the object to be cooked. The heater may be a graphite heater. This heater may serve as a kind of broil heater, and the heater may be used as a grill use using a direct heat or radiant heat.

As another example, the first heat source module 150 may heat the object to be cooked in an inductive heating method using a magnetic field generated in a working coil.

The second heat source module 160 may be a kind of convection heater. The second heat source module 160 may emit convection heat into the cavity S1 together with the convection fan so as to serve to improve uniformity of cooking. On the other hand, the second heat source module 160 is provided without the convection fan, and may supply radiant heat to the object to be cooked by using a heat wire like the first heat source module 150.

A convection heater 165 may be disposed in the second heat source module 160. The convection heater may be formed in a bar type having predetermined length and diameter. For example, the convection heater may be a sheath heater in which a protecting tube of a heat wire is made of metal. On the other hand, the convection heater may be a carbon heater, a ceramic heater, a halogen heater that are configured such that a filament is enclosed inside a tube made of a transparent or translucent material.

The third heat source module 170 may be disposed at the upper surface of the cavity S1 to face the first heat source module 150. The third heat source module 170 may emit radiant heat into the cavity S1 by using a heater, like the first heat source module 150. The heater may emit radiant heat downwards, i.e., towards the cavity S1, and may heat an upper portion of the object to be cooked. In FIG. 7, reference numeral 175 indicates a temperature probe to measure temperature in the cavity S1.

Although not shown in the drawing, the casing 100, 200 may include a fourth heat source module. The fourth heat source module may include a magnetron oscillating microwaves and a wave guide guiding the microwaves oscillated from the magnetron to the cavity S1.

The outer casing 200 may be disposed outside the inner casing 100. As shown in FIGS. 2 and 3, an exterior shape of the cooking appliance may be composed of the outer casing 200. The outer casing 200 may include the bottom casing 210 forming a bottom of the cooking appliance, a rear casing 220 forming a rear surface thereof, and an upper casing 240 forming an upper surface thereof. The door 300 to be described below may be disposed in front of the cooking appliance to form the front surface of the cooking appliance.

The bottom casing 210 may be provided to be spaced apart from the lower frame 130 of the inner casing 100. The bottom casing 210 may be formed in an approximate plate shape. The bottom casing 210 may be placed on the lower surface part 2 of the kitchen system 1. An insulator (not shown) may be filled in the first insulating space IS1 between the bottom casing 210 and the lower frame 130.

As shown in FIGS. 6 to 7, a bottom spacer 215 may protrude from the bottom casing 210. The bottom spacer 215 may be formed by protrude downward from the bottom casing 210. The bottom spacer 215 may be in contact with the lower surface part 2 of the kitchen system 1 to support the cooking appliance. In the embodiment, a plurality of the bottom spacers 215 may be provided at the bottom casing 210.

The bottom casing 210 and the lower surface part 2 of the kitchen system 1 may be spaced apart from each other to form a gap by the bottom spacers 215. The lower gap G1 may serve as a lower intake port, and a first air flow path AC1 may be connected to the lower intake port G1. Air flowing from the outside space may be moved along the first air flow path AC1. In FIG. 7, arrow ① indicates a direction in which the external air flows into the first air flow path AC1, and arrow ② indicates a direction in which the air is moved toward the rear space of the cooking appliance along the first air flow path AC1. The first air flow path AC1 will be described again below.

As the bottom spacers 215 space the bottom casing 210 and the lower surface part 2 of the kitchen system 1 from each other, the bottom spacers 215 may form the lower intake port G1 through which the external air can flow inwards. Referring to FIG. 1, the external air can flow in a direction of arrow ① through the lower intake port G1 formed by the bottom spacers 215. The air flowing as described above is moved along the outer casing 200 of the cooking appliance may reduce surface temperature of the cooking appliance and temperature inside the electric chamber S2.

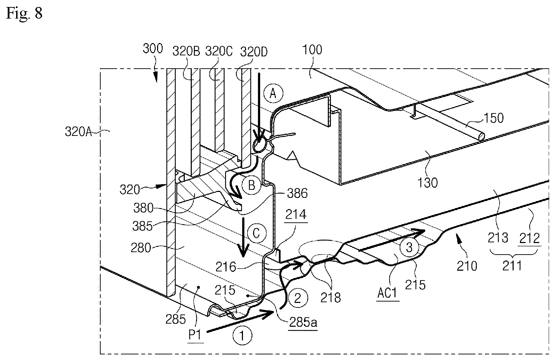

FIG. 8 is a sectional view showing part A in FIG. 7. As shown in the drawing, an upper surface 2a of the lower surface part 2 of the kitchen system 1 may be spaced apart from the bottom casing 210 by the bottom spacers 215. External air may be flow into the lower intake port G1 spaced as described above. The upper surface 2a of the lower surface part 2 of the kitchen system 1 may be understood as a placing surface on which the cooking appliance is placed.

A lower end placing portion 285 of a front frame 280 to be described below may be placed on the bottom casing 210. Some of the plurality of bottom spacers 215 are formed in a position in which the front frame 280 and the bottom casing 210, thereby reinforcing strength of the bottom casing 210.

The lower end placing portion 285 of the front frame 280 may have a shape depressed downwards. Water may collect in a water tray P1 that is a depressed internal space of the lower end placing portion 285. The water may flow outwards from the internal space of the cavity S1, and may flow downwards along an inner surface of the door 300.

After food is cooked with steam, when the door 300 is opened, high-temperature steam existing in the cavity S1 is brought into contact with external air. Furthermore, a temperature difference between the internal space and the external space of the cavity S1, dew condensation may be generated on the inner surface of the door, more specifically, a rear panel 320D or a rearmost panel 320D. The generated water may fall (in a direction of arrow A in FIG. 8) along a surface of the rear panel 320D.

The falling water is transferred to a lower frame 380 constituting the door 300, and may flow further downwards (in a direction of arrow B in FIG. 8) along a drainage guide 385 of the lower frame 380. Finally, the water discharged downwards along the drainage guide 385 may fall downwards (in a direction of arrow C of FIG. 8) towards the water tray P1. Then, the water may be collected in the water tray P1 and evaporated, or may be discharged outwards through a drainage hole (not shown) formed in the water tray P1.

For reference, the door 300 is illustrated as being closed in FIG. 8, and in this case, a last end 386 (or lowermost end 386) of the drainage guide 385 may be disposed in front of or at front of the rear panel 320D constituting the door 300, i.e., at a position that is farther from the inner casing 100 than the rear panel 320D (for example along a horizontal direction or front-rear direction of the appliance). At this state, when the door 300 is opened, the last end 386 of the drainage guide 385 may be disposed or moved closer to the inner casing 100 than the rear panel 320D. Therefore, water dripping off or generated/condensed in the opening process of the door 300 and flowing along the rear panel may be precisely transferred to the water tray P1 by being guided by or passing the last end 386 of the drainage guide 385. The last end 386 of the drainage guide 385 may be understood as a kind of nozzle structure. The structure of the lower frame 380 including the drainage guide 385 will be described again below.

FIG. 8 is a view showing a structure of the bottom casing 210. As shown in the drawings, in the embodiment, the bottom casing 210 may have a double structure. The bottom casing 210 may be composed of an upper plate 213 and a lower plate 212, and a predetermined space is provided between the upper plate 213 and the lower plate 212.

This space may provide a part of the first air flow path AC1. As described above, the first air flow path AC1 divided from other spaces may be provided between the lower plate 212 and the upper plate 213 of the bottom casing 210. The first air flow path AC1 may be disposed below the first heat source module 150. Therefore, air flowing rearwards along the first air flow path AC1 may cool the first heat source module 150.

As the first air flow path AC1 is provided inside the bottom casing 210, the first air flow path AC1 may be prevented from being affected from surrounding structures of the cooking appliance. In other words, regardless of shape, size, or material of the kitchen system in which the cooking appliance is installed, external air may stably flow along the first air flow path AC1 having constant size and shape. The first air flow path AC1 may be connected to a second air flow path AC2 to be described below, thereby providing a continuous air flow path in the cooking appliance.

The lower end placing portion 285 of the front frame 280 may be placed on a front portion of the bottom casing 210, the portion facing the door 300. The lower end placing portion 285 of the front frame 280 may be understood to be supported by the front portion of the bottom casing 210. More specifically, the lower end placing portion 285 of the front frame 280 may be overlapped with an upper portion of the lower plate 212 constituting the bottom casing 210.

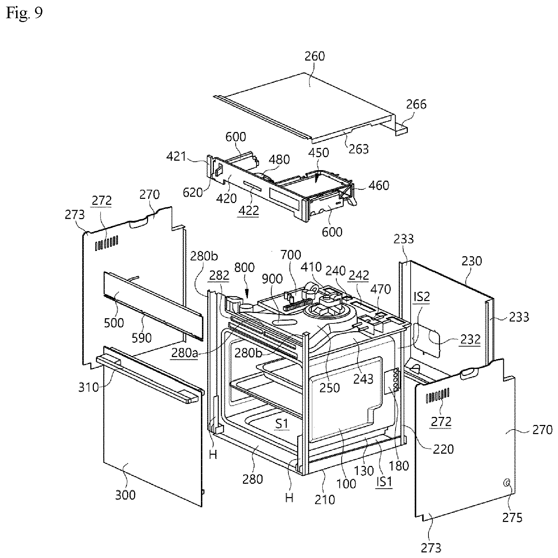

A blocking part 214 may be provided at a first end of the upper plate 213. The blocking part 214 may block heat of the first heat source module 150 from being transferred toward a door hinge H (referring to FIG. 9) disposed at front of the upper plate 213. To this end, the blocking part 214 may be bent at the end of the upper plate 213. The blocking part 214 may be provided at a front portion of the upper plate 213, i.e., a portion facing the door 300. The blocking part 214 may be bent in a direction in which height of the upper plate 213 is increased. Unlike what is shown in FIG. 8, the blocking part 214 may be formed higher to match with height of the door hinge H.

The upper plate 213 and the lower plate 212 may be spaced apart from each other. The upper plate 213 and the lower plate 212 may be in close contact with each other at some positions. As shown in FIG. 8, the upper plate 213 and the lower plate 212 protrude to face each other to form a close contact portion 218. The close contact portion 218 allows the upper plate 213 and the lower plate 212 to be in close contact with each other, so that the upper and lower plates supports the weight of components disposed on the upper portion of the bottom casing 210. The close contact portion 218 may include a plurality of close contact portions 218 disposed along a width direction of the bottom casing 210.

An inlet 216 may be formed in the lower plate 212. The inlet 216 may be formed by vertically penetrating a part of the lower plate 212. The inlet 216 may be connected to the lower intake port G1. The external air flowing into the lower intake port G1 may be suctioned into the first air flow path AC1 through the inlet 216. A suctioning force of a cooling fan module 410 to be described below extends to the first air flow path AC1, so that air of the first air flow path AC1 may flow rearwards.

Therefore, the external air flowing into the lower intake port G1 formed by the bottom spacers 215 may flow into the gap between the upper plate 213 and the lower plate 212 through the inlet 216 formed in the lower plate 212. The flowing air may be moved rearwards along the first air flow path AC1, and may flow into the second air flow path AC2 the rear casing 220 and a rear cover 230 to be described below.

The inlet 216 may be formed in a front portion of the lower plate 212, and the portion is close to the door 300. In other words, the inlet 216 is not formed at several positions of the lower plate 212, and is focused to the front portion close to the door 300. As such, dispersion of the suctioning force of the cooling fan module 410 is prevented, and the suctioning force can be focused to both of the inlet 216 and the lower intake port G1. Of course, a plurality of inlets 216 may be disposed at the front portion of the lower plate 212. In FIG. 6, reference numeral 412 represents an internal space of the cooling fan module 410, and reference numeral 415 represents a fan motor of the cooling fan module 410.

For reference, in FIG. 8, arrow ① indicates a passage in which external air flows into the lower intake port G1, arrow ② indicates a passage in which the inflow air flows into the first air flow path AC1 through the inlet 216, and arrow ③ indicates a passage in which the air is moved rearwards along the first air flow path AC1.

Meanwhile, the air flowing along the first air flow path AC1 between the lower plate 212 and the upper plate 213 may be transferred to the second air flow path AC2. The air moved rearwards along the first air flow path AC1 may flow toward the second air flow path AC2 between the rear casing 220 and the rear cover 230 (referring to a direction of arrow ③ in FIG. 7).

The air flowing in the second air flow path AC2 may be moved upwards along the second air flow path AC2.

As described above, the air moved upwards (direction of arrow ③) along the second air flow path AC2 passes a rear side of the second heat source module 160. Accordingly, the air passing through the second air flow path AC2 can cool the rear side of the second heat source module 160.

Furthermore, the air may flow into the electric chamber S2 through a connection holes 242 (referring to FIG. 9) of the upper casing 240 to be described below. The air may flow into the electric chamber S2 through a connection holes 242 of the upper casing 240 (direction of arrow ④. The air flowing into the electric chamber S2 is suctioned into the cooling fan module 410 (direction of arrow ⑤), and then may be moved forwards (direction of arrow ⑥) along the third air flow path AC3. Eventually, the air may be discharged outwards through an exhaust port 282.

The air transferred to the electric chamber S2 may cool the inside space of the electric chamber S2. The third air flow path AC3 is disposed at an upper portion of the third heat source module 170, so that the air passing through the third air flow path AC3 may cool the upper portion of the third heat source module 170.

Briefly, it may be understood that the external air flows inwards through the front lower portion of the cooking appliance, be circulated inside the cooking appliance, and then be discharged outwards through the front upper portion thereof. In this process, the external air may cool all surroundings of the first heating source module (AC 1), the second heating source module (AC2), and the third heating source module (AC3).

Meanwhile, in FIG. 7, arrow ④' indicates an inflow direction of air flowing inwards through an air in-outflow portion 265 of an upper cover 260. The external air does not necessarily flow only through the front lower portion of the cooking appliance, but may also flow through a clearance formed in an upper rear portion of the cooking appliance. Of course, when the air in-outflow portion 265 is not formed in the upper cover 260, there may be no inflow of air through arrow ④'. When the upper cover 260 does not have the air in-outflow portion 265, the air inflow path is reduced, but the suctioning force of the cooling fan module 410 may be focused to the front lower portion of the cooking appliance.

Referring to FIGS. 2 to 5, the view shows the outer casing 200 surrounding the inner casing 100. A detailed structure of the outer casing 200 is shown in FIG. 7. A second insulating space IS2 may be formed between the rear casing 220 constituting the outer casing 200 and the inner casing 100. The second insulating space IS2 is filled with an insulator (not shown), thereby preventing heat of the cavity S1 from being discharged outwards.

The rear cover 230 may be disposed in rear of the rear casing 220 constituting the outer casing 200. Furthermore, a predetermined empty space may be formed between the rear casing 220 and the rear cover 230. The empty space between the rear casing 220 and the rear cover 230 may serve as the second air flow path AC2. Furthermore, as shown in FIG. 7, a convection motor 163 for rotation of a convection fan constituting the second heat source module 160 may be disposed in the second air flow path AC2.

Furthermore, referring to FIGS. 5 and 6, the upper cover 260 may be disposed above the upper casing 240. The upper cover 260 may cover an upper portion of the electric chamber S2 to shield the electric chamber S2. The electric chamber S2 may be formed between the upper casing 240 and the upper cover 260. The cooling fan module 410 may be disposed in the electric chamber S2. The cooling fan module 410 suctions external air, and may discharge air that has risen in temperature while passing through the inside space of the cooking appliance, outwards. The electric chamber S2 may be understood as an upper space distinguished from the cavity S1. As another example, the electric chamber S2 is disposed at a lower portion of the cavity S1 to serve as a lower space distinguished from the cavity S1. The cooling fan module 410 will be described again below.

Meanwhile, the air moved along the second air flow path AC2 may be moved forwards along the third air flow path AC3 (referring to FIG. 7) formed in the cooling fan module 410. The air moved forwards may finally be discharged outwards. An outlet through which the air is discharged outwards may be formed between the door 300 and the panel unit 500 (referring to arrow ② in FIG. 1). More specifically, the air may be discharged through the exhaust port 282 formed in the front frame 280 to be described below, and the air may finally be discharged outwards through the gap between the door 300 disposed in front of the exhaust port 282 and the panel unit 500.

Referring to FIG. 3, the rear cover 230 may be shaped as an approximate square plate. The rear cover 230 may have a through portion 232. A shield cover 232a may be coupled to the through portion 232. The shield cover 232a may cover the through portion 232, when the shield cover 232a is removed, the through portion 232 may be opened. An operator can open the shield cover 232a and then approach the second air flow path AC2. In other words, the shield cover 232a may be removed when approaching a rear inside portion of the cooking appliance for maintenance of the cooking appliance.

A rear through hole 235 may be formed in the rear cover 230. The rear through hole 235 may be understood as an air flow path connected to the outside space. The rear through hole 235 may be formed in a center portion of the rear cover 230. As another example, the rear through hole 235 may be omitted in the rear cover 230.

A rear fastening portion 233 may be provided on an edge of the rear cover 230. The rear fastening portion 233 may have the rear cover 230 having a bent edge portion. The rear fastening portion 233 is provided to couple the rear cover 230 and a side cover 270 to each other. The rear fastening portion 233 and a side end of the side cover 270 may be assembled with a fastener such as a screw. Furthermore, the rear cover 230 may be assembled to the rear casing 220 at the same time.

Next, referring to FIG. 9, the upper casing 240 may be disposed on an upper surface of the inner casing 100. The upper casing 240 may be understood to form a bottom surface of the electric chamber S2. Various components including the cooling fan module 410 may be disposed at the upper casing 240.

The connection holes 242 may be open in rear of the upper casing 240 The connection holes 242 may be formed as a vertically penetrating shape at a rear side of the upper casing 240. The connection holes 242 may connect the second air flow path AC2 and the electric chamber S2 to each other. The connection hole 242 may include a plurality of connection holes 242 disposed along a rear edge of the upper casing 240.

As described above, the plurality of connection holes 242 is opened vertically, but the plurality of connection holes 242 may be shield by the upper cover 260. Referring to FIG. 9, a cover plate 266 of the upper cover 260 is disposed above the connection holes 242. The cover plate 266 may cover the connection holes 242 while being spaced upwards from the connection holes 242 at a predetermined distance. In this state, the connection holes 242 are not directly connected to the outside space of the outer casing 200, and the connection holes 242 may connect only the second air flow path AC2 and the electric chamber S2 to each other.

A tank mounting part 243 may be formed at one portion of the upper casing 240. The tank mounting part 243 may be understood as a portion in which the water tank 450 and a tank housing 460, in which the water tank 450 is placed, to be described below, are disposed. The tank mounting part 243 may be formed at a position biased towards the front side in the mounting surface of the upper casing 240. In other words, the tank mounting part 243 is formed to be biased towards the front side of the cooking appliance.

A guide duct 250 may be provided on the upper mounting surface of the upper casing 240. The guide duct 250 may have a structure covering a part of the mounting surface. The guide duct 250 may form a guide passage between the guide duct and the mounting surface. The guide passage may be understood as the third air flow path AC3 connected to the second air flow path AC2. Air discharged from the cooling fan module 410 may be discharged outwards through the guide passage. Therefore, the guide duct 250 may be understood as a part of the cooling fan module 410.

Next, in describing the upper cover 260, as shown in FIGS. 3 and 9, the upper cover 260 may have an approximate square plate shape. The upper cover 260 may be coupled to the upper casing 240 to form the electric chamber S2 between the upper cover 260 and the upper casing 240. More specifically, the electric chamber S2 may be provided in a space surrounded by the upper casing 240, the upper cover 260, the side cover 270, and a front housing 420 to be described below.

### Description of the Related Art

Various types of cooking appliances are used to heat food at home or in restaurants. For example, various cooking appliances such as microwave ovens, induction heating electric ranges, and grill heaters are used.

When classifying the cooking appliance according to a shape of cooking chamber in which food is cooked, the cooking appliance may be classified into an open type cooking appliance and a sealed type cooking appliance. The sealed type cooking appliance includes an oven, a microwave oven, etc. having a door, and the open type cooking appliance includes a cooktop, a hob, etc.

Recently, as the sealed type cooking appliance, a steam oven has been used. The steam oven refers to an oven equipped with a function of injecting high temperature steam into a cooking chamber and controlling humidity of food using the steam. The steam oven can prevent food from drying out and maintain the taste and the aroma of the food.

The steam oven includes a steam supply apparatus to supply steam. The steam supply apparatus includes a steam generator generating steam, and a water tank supplying water to the steam generator. Water injected from the water tank passes through a water supply tube flows into the steam generator, and the water flowing into the steam generator is heated by a heater of the steam generator to generate steam. As described above, the generated steam flows into a cooking chamber and is circulated in the cooking chamber, and in this process, cooking using steam is performed.

After cooking, when a door is opened, high-temperature steam present inside the cooking chamber is brought into contact with outside air. Furthermore, due to a temperature difference between the inside space and the outside space of the cooking chamber, dew condensation may occur on an inner surface of the door. Water droplets generated on the inner surface of the door fall along the inner surface of the door. The falling water droplets may be transferred to a lower frame constituting a casing of the steam oven, and the water collected in the lower frame may be evaporated.

However, during an opening process of the door, water droplets may fall to the floor without being transferred to the lower frame. When the door is rotated, a gap between the door and the lower frame widens and water falls therebetween. In this case, the surroundings of the steam oven become dirty and hygiene thereof is deteriorated, which is a problem.

In order to solve this problem, Korean Patent No. 10-1359463 (related art 1) discloses an oven in which a water tray is provided at a lower portion of a door to store falling water and a buffer tank is provided at a main body of the oven to receive the water from the water tray. Furthermore, Korean Patent No. 10-0563732 (related art 2) discloses an oven in which a drain rail part is provided at a lower portion of a door and a discharge rail part is provided at a main body to receive water from the drain rail part.

In both of the related art 1 and the related art 2, the oven requires a separate water tray structure at the door, and the number of components of the door increases, which is a disadvantage. Specifically, since a separate structure (discharge pipe and connection pipe) to transfer water from the water tray to a water reservoir part (buffer tank and discharge rail part) at the main body is required, the structure of the door becomes more complex.

Furthermore, in the related art 1 and the related art 2, the water tray at the door has a structure that can store water. Therefore, water remaining in the water tray without being transferred to the main body may cause bad odors and deteriorate hygiene.

Meanwhile, the door of the conventional steam oven is composed of glass for seeing through the cooking chamber, and a door frame coupled to the glass. The door frame may have an approximate square frame shape in which a plurality of components is assembled to each other, and the plurality of components may be assembled to each other by fasteners such as screws. When assembly of the components is performed using screws, the number of components and the number of man-hours will increase. Furthermore, the number of man-hours for disassembling the door frame inevitably increases.

Moreover, when screws made of metal are in continuously contact with water flowing along the inner surface of the door, the screws are easily rusted, which is a problem.

Fastening ends 263 may be provided on opposite portions of the upper cover 260. Each of the fastening ends 263 may be shaped as a shape in which the opposite ends of the upper cover 260 are bent downwards. Each fastening end 263 may be overlapped with the upper end of the side cover 270. The upper cover 260 may be coupled to the upper end of the side cover 270 by each fastening end 263.

A connecting-bent portion 264 may be provided at a rear portion of the body of the upper cover 260. The connecting-bent portion 264 may be formed in a shape bent downwards from the rear portion of the body of the upper cover 260. An upper end of the connecting-bent portion 264 is connected to the rear portion of the body of the upper cover 260, and a lower end thereof is connected to the cover plate 266.

The air in-outflow portion 265 may be formed in the connecting-bent portion 264. The air in-outflow portion 265 may be formed by penetrating a portion of the connecting-bent portion 264. The air in-outflow portion 265 may connect the electric chamber S2 to the external space. The external air may flow into the electric chamber S2 through the air in-outflow portion 265, or the air in the electric chamber S2 may be discharged outwards through the air in-outflow portion 265.

As shown in FIG. 9, the outer casing 200 may include the side cover 270. The side cover 270 may consist of a pair of side covers. The pair of side covers 270 may cover left and right surfaces of the inner casing 100. Each of the side covers 270 may have an approximate flat plate structure.

Each of the side covers 270 may have the side through hole 272. The side through hole 272 may be formed by penetrating each side cover 270. External air may flow into the cooking appliance through the side through hole 272

The side through hole 272 may be formed in an upper portion of each side cover 270. The side through hole 272 may be formed in the upper portion of each side cover 270 constituting the electric chamber S2. Accordingly, the side through hole 272 may allow the external air to be supplied to the electric chamber S2.

A side coupling part 273 may be provided on an edge of each side cover 270. The side coupling part 273 may couple each side cover 270 to other components such as the bottom casing 210, the upper casing 240, the front frame 280, or the like. The side coupling part 273 may be coupled to other components with a fastener such as a screw, or may be coupled to other components in a welding manner.

A side spacer 275 may be formed in each side cover 270. The side spacer 275 may protrude outwards from each side cover 270. The side spacer 275 may space the side covers 270 and the side surface part 5 of the kitchen system 1 from each other. Accordingly, the external air may flow inwards through the side gap G2 (referring to FIG. 6) formed by the side spacer 275, and may be supplied to the electric chamber S2. Therefore, the side gap G2 may be understood as a side intake port G2. The side intake port G2 may serve as an intake port of the cooking appliance together with the lower intake port G1.

Next, showing the front frame 280, as shown in FIG. 9, the front frame 280 may be shaped in an approximate square frame. The front frame 280 may be disposed at front of the inner casing 100. The front frame 280 may be open at a center portion thereof to prevent the cavity S1 from being covered. The front frame 280 may be understood as a front casing.

The front frame 280 may protrude upwards higher than the inner casing 100. The portion protruding upwards may form a part of the electric chamber S2. An upper portion of the front frame 280 may constitute the electric chamber S2 together with the rear cover 230, the upper casing 240, the upper cover 260, and the side covers 270.

In the embodiment, opposite ends of the front frame 280 protrude upwards, but a portion between the opposite ends may be formed to have a relatively low height. In other words, an upper center portion of the front frame 280 may have a partially omitted structure, and may have a cut-out portion 280a (FIG. 9). As described above, the cut-out portion 280a shaped to be depressed from the upper portion of the front frame 280 may be covered by the front housing 420 to be described below.

A pair of coupling posts 280b relatively protruding upwards may be provided at opposite ends of the cut-out portion 280a. Opposite ends of the front housing 420 may be respectively coupled to the coupling posts 280b. More specifically, a pair of panel fixing parts 421 provided at the opposite ends of the front housing 420 may be respectively coupled to the pair of coupling posts 280b.

The front frame 280 may be made of a metal material.

The front frame 280 may be coated with glassiness ceramics. In other words, a surface of the front frame 280 may be formed in a vitreous enamel method. For reference, in FIG. 8, reference numeral 180 indicates a casing holder, and the casing holder 180 may serve to fix the inner casing 100 and the front frame 280 to a vitreous enamel method during vitreous enamel manufacturing of the inner casing 100 and the front frame 280. Furthermore, the casing holder 180 may serve as a connector when the inner casing 100 and the rear casing 220 are assembled to each other.

However, when the surface of the front frame 280 is formed in the vitreous enamel method, the front frame 280 may be twisted due to a hot manufacturing method. When the front frame 280 is twisted, an assembling error may occur in a portion where the front frame and other components are coupled to each other. Specifically, in the embodiment, a hinge module 600 that is an operated component, and an opening device 480 are disposed at the upper portion of the front frame 280, so it is necessary to suppress deformation of the front frame 280 as much as possible. In order to prevent this problem, in the embodiment, the cut-out portion 280a may be formed at the upper center portion of the front frame 280. The cut-out portion 280a omitted as described above may be free from deformation of the front frame 280.

As described above, the relatively protruding coupling posts 280b may be respectively provided at opposite sides of the cut-out portion 280a of the front frame 280. The coupling posts 280b may be respectively coupled to the hinge module 600. The hinge module 600 is connected to the panel unit 500 to load weight generated when the panel unit 500 is rotated. Accordingly, since the front frame 280 is made of a metal material, even when a large weight is loaded to the hinge module 600, the front frame 280 can firmly support the hinge module 600.

A frame of the front frame 280 may be shaped in an approximate square frame shape. An edge of the front frame 280 may be directly fixed to the inner casing 100.

A lower end of the front frame 280 may be fixed to the bottom casing 210 described above. Furthermore, opposite ends of the front frame 280 may be respectively coupled to the side covers 270. As described above, a plurality of components may be connected to each other through the front frame 280.

The exhaust port 282 may be formed in the front frame 280. The exhaust port 282 may be formed by penetrating the upper portion of the front frame 280 in the front-rear direction. The exhaust port 282 may serve as an outlet through which air discharged through the guide duct 250 may be discharged outwards from the cooking appliance. The exhaust port 282 may extend long in the left-right direction at the upper portion of the front frame 280. The exhaust port 282 may be composed of one or a plurality of exhaust ports.

The exhaust port 282 may be open toward a gap between the door 300 and the panel unit 500. Accordingly, air discharged through the exhaust port 282 may be discharged forwards through the space between the door 300 and the panel unit 500. The exhaust port 282 is usually covered by the panel unit 500, so the exhaust port 282 does not hurt the aesthetics of the cooking appliance. Specifically, the panel unit 500 includes an air guide 590 and may make the exhaust port 282 more invisible from the user's field of view.

As shown in FIG. 8, the lower end placing portion 285 may be provided at the lower portion of the front frame 280. The lower end placing portion 285 may be shaped to be bent from the lower portion of the front frame 280. The lower end placing portion 285 may be placed on the upper portion of the bottom casing 210.

As described above, an upper surface 285a of the lower end placing portion 285 may be depressed downwards relatively more than other portions. Furthermore, the depressed portion in the upper surface 285a of the lower end placing portion 285 may be the water tray P1. Water may be collected in the water tray P1. The water may flow outwards from the internal space of the cavity S1, and may flow downwards along an inner surface of the door 300.

The door 300 may be provided in front of the front frame 280. The door 300 may serve to open and close the cavity S1. The door hinge H is connected to a lower portion of the door 300, so that the door 300 may be rotated. In the embodiment, the door hinge H is composed of a pair of door hinges H, and the pair of the door hinges may be connected to opposite sides on a lower end of the door 300. The door 300 may open and close the cavity S1 in the pull-down method in which the upper end is vertically rotated on the lower end.

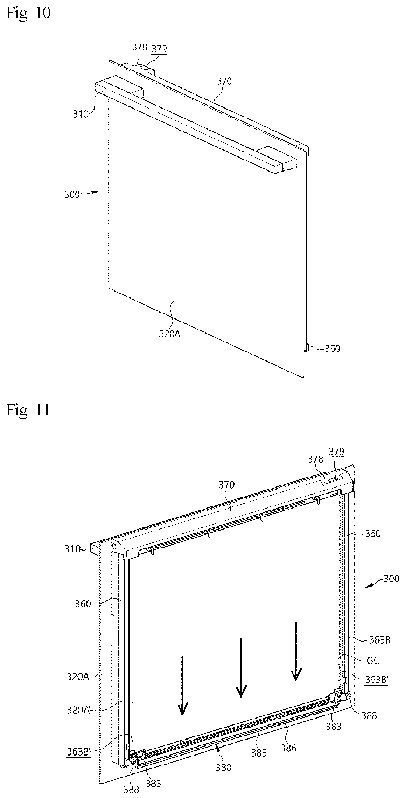

As shown in FIG. 10, the door 300 may be shaped as a hexahedron entirely having a predetermined thickness.

A transparent part 320 may be applied to at least a part of the door 300 so as to see the cavity S1. The transparent part 320 may be formed to withstand high temperature and high pressure, and may have functions such as waterproofing, heat dissipation, and the like.

In more detail, the door 300 may include the transparent part 320, and a door frame 360, 370, 380 coupled to and/or surrounding the transparent part 320. The door frame 360, 370, 380 may be coupled to the transparent part 320, and may be connected to the casing 100, 200. The door frame may support the transparent part. A detailed structure of the door frame 360, 370, 380 will be described below.

Reference numeral 310 indicates a handle. The handle 310 may serve to open and close the door 300. The handle 310 may be disposed at an upper front surface of the door 300.

In the embodiment, the transparent part 320 of the door 300 may include a plurality of panels 320A to 320D. The plurality of panels 320A to 320D may be made of a transparent or translucent glass or plastic material. The plurality of panels 320A to 320D may be stacked with each other at predetermined intervals to form one transparent part 320, e.g. stacked in a front-rear direction.

For example, the transparent part 320 may include a front panel 320A disposed at the foremost side, the rear panel 320D disposed at the rearmost side, and one or a plurality of inner panels 320B and 320C disposed therebetween. The one or more inner panels 320B and 320C are optional and may not be present. A surface of the front panel 320A forming a front surface of the door 300 may optionally be coated or covered with a film to have a color different from the other panels.

As shown in FIG. 8, it is shown that the two inner panels 320B and 320C may be disposed between the front panel 320A and the rear panel 320D. The two inner panels 320B and 320C may include a first inner panel 320B and a second inner panel 320C. The first inner panel 320B may be closer to the front panel 320A than the second inner panel 320C, and the second inner panel 320C may be closer to the rear panel 320D than the first inner panel 320B.

As another example, the transparent part 320 may be composed of a single panel, or the transparent part 320 may be composed of only the front panel 320A and the rear panel 320D without the inner panels 320B and 320C.

For reference, in FIGS. 10 to 12, in order to show a structure of the door frame 360, 370, 380, among the plurality of panels 320A to 320D constituting the transparent part, except for the front panel 320A, it is shown that the rear panel 320D and the inner panels 320B and 320C are removed.

At this point, the front panel 320A may have a larger area than the other panels disposed behind the front panel. Therefore, the user in front of the cooking appliance can only observe the front panel 320A of the door 300.

The other panels and the door frame 360, 370, 380 that are disposed behind the front panel 320A are hidden from the user's view. Then, the aesthetic of the door 300 may be enhanced.

Meanwhile, when the front panel 320A has a relatively larger area, a step difference occurs between the front board and the remaining panels. The door frame 360, 370, 380 may be coupled to the step difference. In other words, the step difference portion may be filled with the door frame 360, 370, 380.

A frame of the door 300 may be formed by the door frame 360, 370, 380. The door frame 360, 370, 380 may form external appearance of upper, lower, and side surfaces of the door 300. The door frame 360, 370, 380 may be shaped as a hexahedron that is open forwards and rearwards. In other words, the door frame 360, 370, 380 may be shaped as a kind of square frame. The door hinges H may be connected to the door frame 360, 370, 380.

As shown in FIG. 11, the door frame may include side frames 360, an upper frame 370, and the lower frame 380. The side frames 360, the upper frame 370, and the lower frame 380 may be coupled to each other to have a square frame shape. The side frames 360, the upper frame 370, and the lower frame 380 may be made of a metal material or a synthetic resin material.

At this point, the side frames 360 may be composed of a pair of side frames that are spaced apart from each other. Upper portions of the pair of side frames 360 may be connected to each other by the upper frame 370. Furthermore, lower portions of the pair of side frames 360 may be connected to each other by the lower frame 380.

In describing a structure of the side frames 360, the side frames 360 may be coupled to a rear surface of the front panel 320A. The side frames 360 may be disposed at positions closer to a center portion of the front panel 320A than left and right edges of the front panel 320A. Accordingly, when viewed from the front space of the cooking appliance, the side frames 360 may be prevented from being exposed. The side frames 360 may be bonded to the rear surface of the front panel 320A with an adhesive.

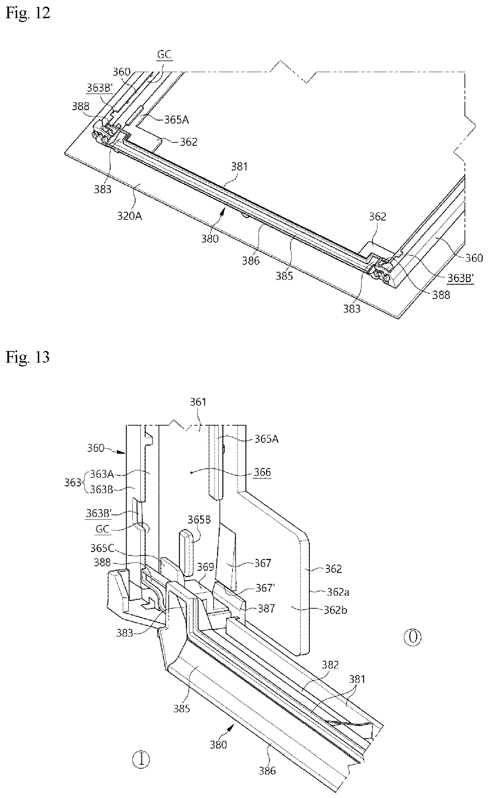

FIG. 12 is a view showing a lower structure of the side frames 360. The lower frame 380 may be disposed between the pair of side frames 360. Opposite ends of the lower frame 380 may be respectively assembled to or assembled with or coupled to the pair of side frames 360. The pair of side frames 360 may have a relative symmetric structure. In the embodiment, the lower frame 380 may optionally have a structure in which the lower frame is assembled to the side frames 360 without a separate fastener (screw, etc.). This structure will be described again below.

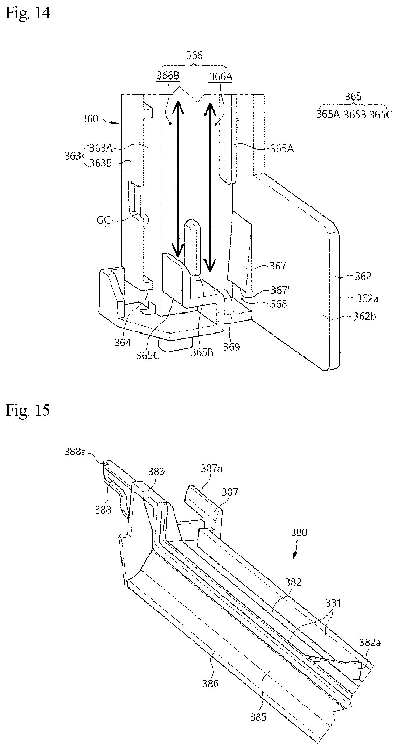

FIGS. 13 and 14 are views showing a lower structure of each of the side frames 360. For reference, FIG. 13 is a view showing one of the side frames 360 to which one end of the lower frame 380 is assembled, and FIG. 14 is a view showing the lower structure of each of the side frames 360 without the lower frame 380.

Each of the side frames 360 may have a side coupling surface 361. The side coupling surface 361 may be understood as a surface of each of the side frames 360, the surface facing the center portion of the door or the door frame. The side coupling surface 361 may be disposed between a front board 362 and a side fence 363B that are respectively disposed at opposite portions of the side frames 360. The inner panels 320B and 320C may be disposed in the side coupling surface 361.

For reference, among the plurality of panels 320A to 320D constituting the transparent part 320, (i) the front panel 320A may be disposed at or on a front surface 362a of the front board 362, (ii) the inner panels 320B and 320C may be disposed in a center portion of the door frame, the center portion being surrounded by the side frames 360, the lower frame 380, and the upper frame 370, and (iii) the rear panel 320D may be disposed at or on a surface of the side fence 363B. Side surfaces of the inner panels 320B and 320C may be disposed at the side coupling surface 361, and lower surfaces of the inner panels 320B and 320C may be disposed at a lower coupling surface 382 of the lower frame 380.

The front panel 320A and the rear panel 320D may be respectively bonded to the front board 362 and the side fence 363B with an adhesive. On the other hands, the inner panels 320B and 320C may be mounted to the center portion of the door frame without an adhesive, the center portion being surrounded by the side frames 360, the lower frame 380, and the upper frame 370. This structure will be described again below.

Each of the side frames 360 may include the front board 362. The front board 362 may have an approximate flat plate shape. The front board 362 may protrude in a center direction of the door 300. The front surface 362a of the front board 362 may be a bonded surface of the front panel 320A, and a rear surface 362b of the front board 362 may constitute one wall surface of an installation space in which the inner panels 320B and 320C are disposed.

The front board 362 may be disposed at front of the side frames 360. In FIG. 13, (I) represents an inside space of the door 300, i.e., a direction of the cavity S1, and (O) represents an outside space of the door 300. The front board 362 may be disposed to face the outside space of the door 300, and the front panel 320A may be bonded thereto.

The side fence 363B may be provided at the opposite side to the front board 362. The side fence 363B may have a flat plate shape as with the front board 362. The side fence 363B may have a structure successively continued from an upper portion to a lower portion of each of the side frames 360.

The side fence 363B may be disposed to be spaced apart from a side surface 363A of each of the side frames 360. The side surface 363A and the side fence 363B of each of the side frames 360 may constitute one side wall part 363. As the side fence 363B is spaced apart from the side surface 363A of each of the side frames 360, a guide channel GC that is a predetermined empty space may be formed between the side fence 363B and the side surface 363A of each of the side frames 360. The guide channel GC may guide movement of a moving guide 388 of the lower frame 380 to be described below.

The side fence 363B may have a channel entrance 363B'. The channel entrance 363B' may be understood as a portion where a height of the side fence 363B protruding in the center direction of the door 300 is relatively low. A last end 388a of the moving guide 388 may be inserted into the guide channel GC through the channel entrance 363B'.

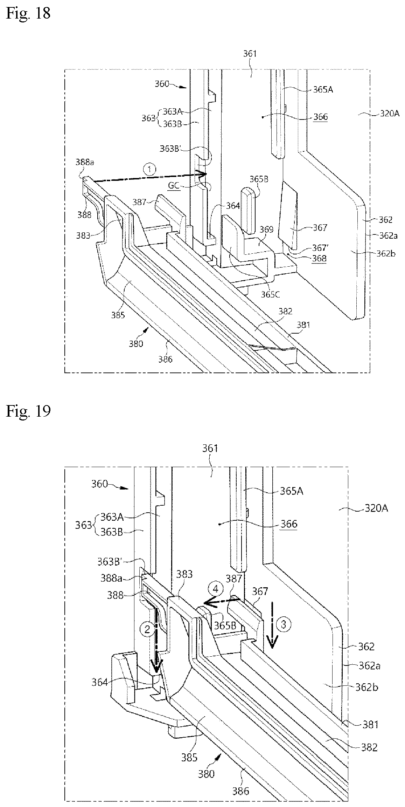

Through the channel entrance 363B', the last end 388a of the moving guide 388 may be moved in a first direction (referring to a direction of arrow ① in FIG. 18). Then, the last end 388a of the moving guide 388 may be moved in a second direction (referring to a direction of arrow ② in FIG. 19). In other words, the guide channel GC is formed in the second direction at each of the side frames 360, and the moving guide 388 of the lower frame 380 may slide inside the guide channel GC in the second direction.

The last end 388a of the moving guide 388 may be inserted into the guide channel GC only through the channel entrance 363B'. This is because a distance between moving guides 388 respectively provided at the opposite ends of the lower frame 380 may be larger than the width between ends of a pair of side fences 363B that face each other. However, in a portion where the guide channel GC is provided, the width of the pair of side fences 363B increases, and thus the last end 388a may be moved in the first direction.

As shown in FIG. 14, a channel end 364 may be provided at a lower end of the guide channel GC. The channel end 364 may be understood as a portion where one end of the guide channel GC is closed. The moving guide 388 may be caught by the channel end 364 to be prevented from being further moved.

As shown in FIG. 13, the plurality of panel guides 365 may be disposed to be spaced apart from each other in each of the side frames 360. The plurality of panel guides 365 may protrude on the side coupling surface 361. The inner panels 320B and 320C constituting the transparent part 320 may be disposed between the panel guides 365. The plurality of panel guides 365 may have a kind of insertion path therebetween. The inner panels 320B and 320C are mounted to the insertion path. In FIG. 14, arrows represent directions to which the inner panels 320B and 320C are mounted.

More specifically, the plurality of panel guides 365 may include a first panel guide 365A, a second panel guide 365B, and a third panel guide 365C. The first panel guide 365A, the second panel guide 365B, and the third panel guide 365C may be disposed to be spaced apart from each other in the front-rear direction. A first insertion path 366A (referring to FIG. 14) may be formed between the first panel guide 365A and the second panel guide 365B. Furthermore, a second insertion path 366B (referring to FIG. 14) may be formed between the second panel guide 365B and the third panel guide 365C.

The first inner panel 320B may be disposed in the first insertion path 366A, and the second inner panel 320C may be disposed in the second insertion path 366B. A front-rear directional width of the first insertion path 366A may be equal to or greater than the thickness of the first inner panel 320B, and a front-rear directional width of the second insertion path 366B may be equal to or greater than the thickness of the first inner panel 320B.

In the embodiment, the first panel guide 365A, the second panel guide 365B, and the third panel guide 365C may be disposed at different heights. The first panel guide 365Amay be disposed relatively higher than the second panel guide 365B, and the second panel guide 365B may be disposed higher than the third panel guide 365C.

A catching step 367 may be provided in each of the side frames 360. The catching step 367 is provided to assemble each of the side frames 360 and the lower frame 380 to each other. In the embodiment, the catching step 367 may be provided on the rear surface 362b of the front board 362. One end of the lower frame 380 may go over the catching step 367 of each of the side frames 360 to be caught by a fixing end 367' of the catching step 367 to be fixed. FIG. 13 is a view showing of a frame assembly 387 of the lower frame 380 going over the catching step 367, and caught by the fixing end 367' of the catching step 367 to be fixed.

As described above, the lower frame 380 is moved in the second direction (downward direction based on FIG. 13), and may be slidingly coupled to each of the side frames 360. In this process, the frame assembly 387 of the lower frame 380 may go over the catching step 367.

More specifically, the lower frame 380 may be moved in the first direction (rightward direction based on FIG. 13) to be brought into close contact with a surface of each of the side frames 360. Next, while the lower frame 380 is moved in the second direction different from the first direction, the lower frame 380 may go over the catching step 367 provided at each of the side frames 360 and may be caught by the fixing end 367' of the catching step 367. In FIG. 14, reference numeral 368 represents an assembly space in which the frame assembly 387 of the lower frame 380 is seated after going over the catching step 367.

The catching step 367 may be formed with a protruding height gradually increasing in the second direction. Then, at the beginning where the frame assembly 387 meets the catching step 367, the lower frame 380 may be easily moved along an upper portion of the catching step 367. Furthermore, after the frame assembly 387 is caught by the fixing end 367', the lower frame 380 may not be easily moved in the opposite direction again.

Based on FIG. 13, an upper end of the catching step 367 may be disposed to be spaced apart from a lower end of the first panel guide 365A. The frame assembly 387 may be positioned between the upper end of the catching step 367 and the lower end of the first panel guide 365A. Furthermore, the frame assembly 387 may be moved downwards to go over the catching step 367.

Meanwhile, a panel support 369 may be provided on the lower portion of each of the side frames 360. The panel support 369 may protrude on the side coupling surface 361. The panel support 369 may support lower ends of the inner panels 320B and 320C that is a part of the plurality of panels 320A to 320D. In other words, the inner panels 320B and 320C may be respectively mounted along the first insertion path 366A and the second insertion path 366B, and then may be brought into contact with the panel support 369 to be fixed.

At this point, the panel support 369 may be formed stepwise to have various heights based on a height direction of the door. In this structure, heights of the lower ends of the first inner panel 320B and the second inner panel 320C that are supported at respective ends by the panel support 369 may be different from each other. As shown in FIG. 8, it is shown that the lower end of the first inner panel 320B is disposed a relatively lower side than the lower end of the second inner panel 320C.

Next, the upper frame 370 will be described. Referring to FIGS. 10 and 11, the upper frame 370 may be disposed at an upper portion of the door frame. The upper frame 370 may connect upper portions of the pair of side frames 360 to each other. The upper frame 370 may be disposed at an upper end of the rear surface of the front panel 320A. Although not shown in the drawings, the upper frame 370 may be assembled to the side frames 360 without separate fasteners. Assembly between the upper frame 370 and the side frames 360 may be performed with the same structure as the assembly structure between the catching step 367 of each of the side frames 360 and the frame assembly 387 of the lower frame 380 to be described below.

Although not shown in the drawings, the upper frame 370 may have a door exhaust port. The door exhaust port may provide a path by which the inside space of the door 300 is open to the outside space of the door 300, on the upper end of the door 300. The door exhaust port may be formed by vertically penetrating through the upper end of the upper frame 370. Air that flows upwards while cooling the door 300 inside the door 300 may be discharged upwards through the door exhaust port and then may be discharged forwards. For reference, the air cooling the door 300 may flow between the plurality of panels 320A to 320D constituting the door 300.

As shown in FIG. 7, a spacer 375 provided in the upper frame 370 may be inserted between the plurality of panels 320A to 320D. The spacer 375 may maintain a distance between the plurality of the panels 320A to 320D. The spacer 375 may be understood to serve the same function as the plurality of panel guides 365 provided at each of the side frames 360.

Looking FIG. 10 again, the upper frame 370 may include a locking body 378. The locking body 378 may operate a door locking device 800 so as to maintain a closed state of the door 300. The locking body 378 may protrude rearwards from the upper frame 370. The locking body 378 may be shaped as an approximate hexahedron shape. The locking body 378 may be disposed to be biased to either of the opposite of the upper frame 370. In the embodiment, the locking body 378 is formed in the upper frame 370, but as another example, the locking body 378 may directly be provided on the door 300, not on the upper frame 370.

A fixing hole 379 with an open upper portion may be formed in the locking body 378. A latch (not shown) of the door locking device 800 which will be described below may be inserted into the fixing hole 379. When the latch is inserted into the fixing hole 379, the latch catches the door 300 to prevent the door 300 from being opened arbitrarily.

Next, in describing the lower frame 380, the lower frame 380 may be disposed between the pair of side frames 360. The lower frame 380 may have an approximate bar structure. The opposite ends of the lower frame 380 may be respectively assembled to the pair of side frames 360. The lower frame 380 may be disposed at the rear surface of the front panel 320A. As shown in FIG. 11, the lower frame 380 may be disposed at a position spaced upwards from a lower end of the front panel 320A.

The lower frame 380 may constitute a lower portion of the door frame 360, 370, 380. The lower frame 380 may support the lower ends of the inner panels 320B and 320C. Furthermore, the lower frame 380 may be in contact with the rear panel 320D. In the embodiment, the lower frame 380 may provide a water drainage structure of water flowing along the surface of the rear panel 320D. This structure will be described again below.

Referring to FIG. 13, the lower frame 380 may include lower fences 381. The lower fences 381 may protrude upwards, i.e., towards the lower ends of the inner panels 320B, and 320C. In the embodiment, the lower fences 381 may be composed of a pair of lower fences, and the lower coupling surface 382 may be formed between the pair of lower fences 381. The lower coupling surface 382 may be directly in contact with the lower ends of the inner panels 320B and 320C, or may be spaced apart from the inner panels 320B, and 320C at predetermined distances.

Among the pair of lower fences 381, a surface of an inner lower fence 381 (lower fence at the left side based on FIG. 13) close to the cavity S1 may be at the same plane as the surface of the side fence 363B. Then, the rear panel 320D may be bonded to both of the surface of the side fence 363B and the surface of the lower fences 381 simultaneously. Reference numeral 382a represents a reinforcing rib connecting the pair of lower fences 381 to each other.

The lower frame 380 may include the drainage guide 385. The drainage guide 385 may guide the water flowing along the surface of the door 300, towards the casing 100, 200. The drainage guide 385 may serve to transfer the water to the casing 100, 200 without storing the water therein.

Referring to FIG. 8, the water flowing downwards along the inner surface of the door 300 may pass through the drainage guide 385 to be transferred to the water tray P1 formed in the lower end placing portion 285 of the front frame 280. In other words, when water flows due to dew condensation occurring on the inner surface of the door 300, the water falls downwards (direction of arrow A in FIG. 8) along the inner surface of the door 300. The water may be collected in the water tray P1 and evaporated, or may be discharged outwards through a drainage hole (not shown) formed in the water tray P1.

The drainage guide 385 may be disposed between the opposite ends of the lower frame 380. The drainage guide 385 may be formed to successively extend between the opposite ends of the lower frame 380. Accordingly, the drainage guide 385 may transfer water to the water tray P1 throughout the entire section of the lower frame 380.

The drainage guide 385 may extend to be inclined towards a lower portion of a front surface of the casing. Referring to FIG. 8, it is shown that the drainage guide 385 extends to be inclined towards the water tray P1. This structure of the drainage guide 385 allows the water to naturally fall into the water tray P1.

As shown in FIG. 15, the drainage guide 385 may have an entirely gentle inclination angle. The last end 386 of the drainage guide 385 may have an inclination angle that is gentler than an inclination angle of an upper portion of the drainage guide 385. The last end 386 of the drainage guide 385 may prevent the water from sharply falling.

When the door 300 is closed, the rear panel 320D at the rearmost side among the plurality of panels 320A to 320D may be disposed closer to the front surface of the casing 100, 200 than the last end 386 of the drainage guide 385. Referring to FIG. 8, it is shown that the rear panel 320D is disposed closer to the front surface of the outer casing 100 than the last end 386 of the drainage guide 385.

In this state, when the door 300 is rotated in an opening direction (a counterclockwise direction based on FIG. 8), the last end 386 of the drainage guide 385 may be disposed closer to the front surface of the outer casing 100 than the rear panel 320D. Therefore, when the door 300 is opened, the water falling along the surface of the rear panel 320D may naturally fall into the water tray P1 through the last end 386 of the drainage guide 385.

In the embodiment, the drainage guide 385 may be integrally provided with the lower frame 380. Accordingly, in order to discharge the water generated due to dew condensation, a separate drainage structure is not required. Since the drainage guide 385 is a part of the lower frame 380, as the lower frame 380 is assembled to the side frames 360, the drainage structure may be naturally formed. Furthermore, a water storage space in which water is collected is not provided in the drainage guide 385, thereby preventing the water from being collected at a lower portion of the door 300 to deteriorate hygiene.

Meanwhile, the frame assembly 387 may be disposed at each of the opposite ends of the lower frame 380. The frame assembly 387 may allow the lower frame 380 to be assembled to each of the side frames 360. More specifically, the frame assembly 387 may go over the catching step 367 of each of the side frames 360 to be caught by the fixing end 367'. FIG. 13 is a view showing the frame assembly 387 going over the catching step 367 and caught by the fixing end 367'.

Referring to FIG. 15, the frame assembly 387 may have a cantilever structure protruding on an end of the lower frame 380. Since the frame assembly 387 has the cantilever structure, the frame assembly 387 is naturally elastically deformed in a process of going over the catching step 367, and then may be recovered to an original shape after completely going over the catching step 367. Reference numeral 387a represents an assembly arm 387a that is a portion of the frame assembly 387 going over the catching step 367.

The assembly arm 387a may be moved in contact with the front surface 362a of the front board 362 of the side frames 360. In the assembling process of the lower frame 380 and the side frames 360, the assembly arm 387a is first located between the upper end of the catching step 367 and the lower end of the first panel guide 365A, and then may go over the catching step 367 while being moved in the second direction.

The assembly arm 387a may protrude in a direction of widening the left-right width of the lower frame 380. The assembly arm 387a may be provided at each of the opposite ends of the lower frame 380. A pair of assembly arms 387a may be assembled to the side frames 360 different from each other, the side frames 360 being disposed at the opposite sides thereof.

A distance between the pair of assembly arms 387a may be less than or equal to the width between the pair of side fences 363B facing each other. Then, when the lower frame 380 is assembled to each of the side frames 360 in the first direction, an end of the assembly arm 387a is prevented from interfering with the side fence 363B. The moving guide 388 should be moved in the first direction through the channel entrance 363B' because of interfering with the side fence 363B, but the assembly arm 387a does not need to pass through the channel entrance 363B'.

The lower frame 380 may include the moving guide 388. The moving guide 388 may serve to guide the second direction among the assembling directions of the lower frame 380 when the lower frame 380 is assembled to each of the side frames 360. The moving guide 388 may be moved in the second direction while being mounted to the guide channel GC of each of the side frames 360. Since the moving guide 388 is moved while being mounted to the guide channel GC, when the lower frame 380 is moved in the second direction, the lower frame 380 is prevented from being moved in a direction of being separated from each of the side frames 360, i.e., the opposite direction to the first direction.

The moving guide 388 may protrude on an end of the lower frame 380 in the cantilever shape as with the assembly arm 387a. The moving guide 388 may be disposed to be spaced apart from the assembly arm 387a. More specifically, the moving guide 388 may be disposed at a rear side closer to the cavity S1 than the assembly arm 387a. Referring to FIG. 15, it is shown that the moving guide 388 protrudes in the same direction as the assembly arm 387a and those are spaced apart from each other.

Reference numeral 388a represents the last end 388a of the moving guide 388, and is a portion located in an inner side of the guide channel GC. The last end 388a of the moving guide 388 is relatively thinner than other portions of the moving guide 388, so that a step structure may be formed. The thickness of the last end 388a of the moving guide 388 may be equal to or less than the front-rear width of the guide channel GC.

As shown in FIG. 13, the moving guide 388 is mounted to the guide channel GC, and the assembly arm 387a is in contact with the front board 362. Therefore, in the assembling process, the lower frame 380 is moved while being in contact with each of the side frames 360 in at least two portions so that assembly can be stably performed. Furthermore, after the assembly is completed, the lower frame 380 maintains the contact state with each of the side frames 360 in at least two portions, so that the assembled state can be stably maintained.

The moving guide 388 may protrude longer in the left-right width direction of the lower frame 380 than the frame assembly 387. In other words, the moving guide 388 may protrude longer than the assembly arm 387a. In this structure, when the lower frame 380 is assembled to each of the side frames 360 in the first direction, an end of the assembly arm 387a may be prevented from interference with the side fence 363B, but the last end 388a of the moving guide 388 may interfere with the side fence 363B. Therefore, the moving guide 388 may be inserted into the guide channel GC only by being moved in the first direction through the channel entrance 363B'.

Based on the height direction of the door 300, the frame assembly 387 and the moving guide 388 may be formed to have different heights from each other. Referring to FIG. 15, the moving guide 388 may be disposed relatively higher than the assembly arm 387a. Accordingly, the assembly arm 387a and the moving guide 388 may be in contact with each of the side frames 360 at different heights.

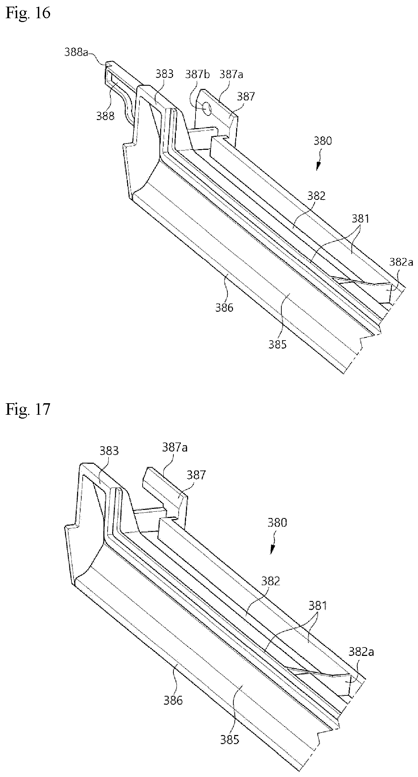

Meanwhile, FIG. 16 is a view showing another embodiment of the lower frame 380 constituting the cooking appliance according to the present disclosure. In describing different parts from the previous embodiment, the lower frame 380 may include the frame assembly 387 in which a frame assembly hole 387b. The frame assembly hole 387b may be formed by penetrating through the frame assembly 387, or by a recessed part of the frame assembly 387.

An assembly protrusion (not shown) of each of the side frames 360 may be mounted to the frame assembly hole 387b. When the lower frame 380 is moved relative to the side frames 360, the assembly protrusion of each of the side frames 360 may be mounted to the frame assembly hole 387b. When the frame assembly 387 is moved upwards of the assembly protrusion and the assembly protrusion of each of the side frames 360 is mounted to the frame assembly hole 387b, the frame assembly 387 may be recovered to the original shape.

FIG. 17 is a view showing another embodiment of the lower frame 380 constituting the cooking appliance according to the present disclosure. In describing different parts from the previous embodiment, the lower frame 380 may include only the frame assembly 387, and the moving guide 388 may be omitted therein. As the entire edge of the lower frame 380 is moved along each of the side frames 360, movement of the lower frame in the second direction may be guided.

In describing an assembly sequence of the door 300, first, the pair of side frames 360 may be bonded to the rear surface of the front panel 320A. Furthermore, the lower frame 380 may be assembled to the lower portions of the pair of side frames 360.

Next, the inner panels 320B and 320C may be mounted to the center portion of the door frame surrounded by the side frames 360 and the lower frame 380. The mounting directions of the inner panels 320B and 320C may be guided by the panel guides 365 provided in each of the side frames 360.

Furthermore, the upper frame 370 may be assembled to the upper portions of the pair of side frames 360. The upper frame 370 may be assembled at the opposite side to the lower frame 380 with the inner panels 320B and 320C located therebetween.

Lastly, the rear panel 320D may be attached on a rear surface of the door frame. The rear panel 320D may be bonded to the rear surface of the door frame. As described above, in the embodiment, the pair of side frames 360, the lower frame 380, and the upper frame 370 constituting the door frame may be assembled to each other with the assembling structure without fasteners.

In the assembling process of the door 300, FIGS. 18 to 20 are views sequentially showing the lower frame 380 assembled to the side frames 360. Referring to FIG. 18, the lower frame 380 may be moved in the first direction (direction of arrow ①), towards each of the side frames 360. The last end 388a of the moving guide 388 provided at an end portion of the lower frame 380 may be moved in the first direction through the channel entrance 363B' of each of the side frames 360.

The last end 388a of the moving guide 388 is located in the guide channel GC through the channel entrance 363B', and simultaneously, the frame assembly 387 of the lower frame 380 may be brought into close contact with a rear surface of the front board 362 of each of the side frames 360. The frame assembly 387 may be located at an upper end of the catching step 367.

Referring to FIG. 19, in this state, the lower frame 380 may be moved downwards, i.e., in the second direction (direction of arrow ②). When the lower frame 380 is moved in the second direction, the last end 388a of the moving guide 388 may be slidingly moved downwards along the guide channel GC. Since the last end 388a of the moving guide 388 is in a mounted state to the guide channel GC, the last end 388a may be moved in a constant direction along the guide channel GC.

At the same time, the frame assembly 387 of the lower frame 380 is also moved downwards, i.e., in the second direction (direction of arrow ③), and goes over the catching step 367. In this process, the frame assembly 387 may be elastically deformed in a direction (direction of arrow ④) opposite to the first direction. When the frame assembly 387 continues to be moved in the second direction while overcoming an elastic force, the frame assembly 387 may completely go over the catching step 367.

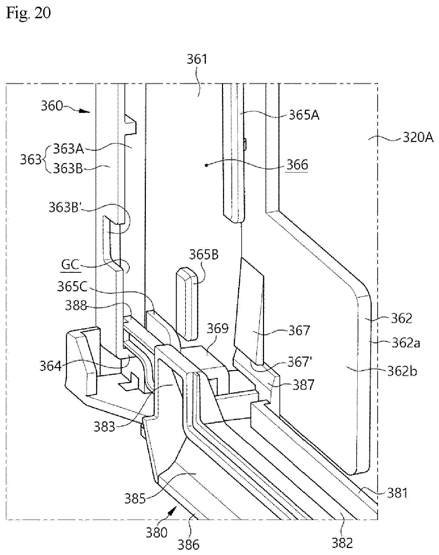

This state is shown in FIG. 20. As shown in the drawing, the frame assembly 387 is caught by the fixing end 367' provided at an end of the catching step 367. Therefore, the frame assembly 387 is prevented from being separated upwards, i.e., the opposite direction to the assembling direction. Furthermore, since the last end 388a of the moving guide 388 is separated from the channel entrance 363B' and moved downwards, the last end 388a of the moving guide 388 may be prevented from being separated forwards, i.e., the opposite direction to the first direction.

For reference, in FIGS. 18 to 20, only one end of the lower frame 380 is shown, but another end of the lower frame 380 may be assembled to the remaining side frame 360 in the same manner.

When the lower frame 380 is assembled to each of the side frames 360, the drainage guide 385 of the lower frame 380 is in a state extending to be inclined downwards. As described above, according to the embodiment, the lower frame 380 may not only support the transparent part 320 but also guide discharge of water due to dew condensation. Therefore, without adding a separate water tray at the lower portion of the door 300, the water can be discharged towards the casing 100, 200.

Next, the front housing 420 disposed in front of the front frame 280 will be described. As shown in FIGS. 5 and 9, the front housing 420 may be disposed in front of the upper portion of the front frame 280. Furthermore, the front housing 420 may be located between a rear surface of the panel unit 500 and the front frame 280 when the panel unit 500 is closed. The front housing 420 may block the upper portion of the front frame 280 to improve the aesthetic of the cooking appliance, and may provide a cam protruding port 422 that is an entrance through which a cam part (not shown) of the opening device 480 to be described below protrudes.

The front housing 420 may be made of a synthetic resin material. The front housing 420 may be easily implemented with a shape more complex than a front panel made of a metal material. The complex shape is implemented in the front housing 420, and the front housing 420 is assembled to the front frame 280, thereby forming a front surface of the cooking appliance. Unlike the embodiment, the front housing 420 may be integrally formed in the upper portion of the front frame 280.

The front housing 420 may have a thin flat plate structure. The front housing 420 may be disposed is in front of the upper portion of the front frame 280. More specifically, the front housing 420 may cover the cut-out portion 280a of the front frame 280.

Furthermore, in looking a structure of the water tank 450, the water tank 450 may have an approximate hexahedral structure. The water tank 450 includes a water storage space that can store water therein. A tank cover 452 may be provided at an upper portion of the water tank 450. The tank cover 452 may cover an upper portion of the water storage space 451.

The tank cover 452 may include a separate tank lid 452'.

The water stored in the water tank 450 is heated by the heater of the steam device to be sprayed into the cavity S1 in a steam form. Furthermore, when a cleaning function is performed to remove foreign substances such as limescale from the internal space of a pipe of the cooking appliance, water that has completed the cleaning function may flow into the water tank 450.

As shown in FIG. 5, a pocket part 455 may be formed at the water tank 450. The pocket part 455 may be formed at a portion where the front surface of the front housing 420 and the front surface of the water tank 450 are connected to each other. The pocket part 455 may have a shape recessed from the front surface of the water tank 450. The pocket part 455 may provide a gripping space in which the user can eject the water tank 450 or inserts the water tank thereinto. In FIG. 9, the reference numeral 470 represents a pump, and the pump 470 may supply water in the water tank 450 towards the heater.

As shown in FIG. 9, the opening device 480 is provided to open the panel unit 500. The opening device 480 may open the panel unit 500 forwards. More precisely, the opening device 480 may allow movement in an initial movement section among the entire movement section where the panel unit 500 is opened to be automatically performed.

The panel unit 500 may be moved by the opening device 480 in a first opening section starting from the first position. Furthermore, the panel unit 500 may be moved by gravity or an external force due to the user in a second opening section extending from a last end of the first opening section to the second position.

The opening device 480 may be disposed in the electric chamber S2. The opening device 480 may be disposed on a surface of the upper casing 240 constituting the electric chamber S2 or a surface of the guide duct 250 coupled to the upper casing 240. In the embodiment, the opening device 480 is fixed to the upper surface of the guide duct 250.

The opening device 480 may be disposed between a pair of hinge modules 600 to be described below. The pair of hinge modules 600 may serve to guide the movement passage of the panel unit 500, and the opening device 480 may automatically open the panel unit 500 in the first opening section among the movement passage.

When the opening device 480 is independently disposed between the pair of hinge modules 600, this independent structure of the opening device 480 and the hinge modules 600 may be simple than an integrated structure of the hinge modules 600 and the opening device 480. Furthermore, the opening device 480 is disposed at a position relatively far away from the hinge modules 600 constituting a rotating shaft of the panel unit 500, so that a larger opening force (torque) may be supplied to the panel unit 500. For reference, in FIG. 7, reference numeral 490 represents an opening sensor. The opening sensor 490 may detect an operational state of the opening device 480.

As shown in FIG. 4, the panel unit 500 may form a part of the exterior shape of the front surface of the cooking appliance. The panel unit 500 may include a display unit 501 (referring to FIG. 1). The display unit 501 may include an input means adjusting operation of the cooking appliance and an output means displaying an operational state of the cooking appliance. For example, the panel unit 500 may include both of the input means and the output means, or the display unit 501 may be provided in a touch panel to which a touch input of the user is applied and the input means may be integrally included in the display unit 501.

The display unit 501 may include a lighting button 535 (referring to FIG. 1) to preset a function that manually turns on or off the lighting module 900 (referring to FIG. 9). Furthermore, when the cooking appliance is an oven, the display unit 501 may display a self-cleaning button (not shown), etc. to preset a self-cleaning function of the cavity S1.

The panel unit 500 may be disposed in front of the front housing 420. Furthermore, when the panel unit 500 is moved, the panel unit 500 may be disposed below the front housing 420. For reference, FIG. 2 shows a state in which the panel unit 500 covers the front housing 420 in front of the front housing 420, and FIG. 4 shows a state in which the front housing 420 is moved and the front housing 420 and the tank entrance are opened.

In other words, FIG. 2 shows a closed state of the panel unit 500, and FIG. 4 shows an opened state of the panel unit 500. Furthermore, when the panel unit 500 is opened, the water tank 450 is in a state of being removed and re-inserted. As shown in FIG. 5, the water tank 450 is ejected.

When the panel unit 500 is opened, the panel unit may serve as a kind of support when the water tank 450 is removed or inserted. When the panel unit 500 is opened, the water tank 450 may be moved along an upper surface of the panel unit 500. The upper surface of the panel unit 500 is based on the opened state of the panel unit 500.

The completely closed state of the panel unit 500 may be referred to as the first position, and the completely opened state thereof may be referred to as the second position. The panel unit 500 may be moved from the first position to the second position, reversely, may be moved from the second position to the first position.

Furthermore, a section in which the panel unit 500 is moved from the first position to the second position may be divided into the first opening section and the second opening section. The first opening section means a section where the panel unit 500 is moved by the opening device 480, and the second opening section means a section extending from the first opening section to the second position.

As described above, the panel unit 500 may be moved by the opening device 480 in a first opening section starting from the first position. Furthermore, the panel unit 500 may be moved by gravity or an external force due to the user in a second opening section extending from a last end of the first opening section to the second position.

More specifically, when the panel unit 500 is moved through the first opening section, the panel unit 500 is in a state of being opened at the predetermined angle. Accordingly, a torque on the hinge modules 600 the due to gravity is generated in the panel unit 500. The torque due to gravity may allow the panel unit 500 to be naturally rotated within the second opening section.

As another example, when a tension or a frictional force due to the hinge modules 600 is larger than the torque due to gravity, the panel unit 500 may be stopped at the last end of the first opening section. In this state, when the user further rotates the panel unit 500 downwards, the panel unit 500 may be moved to the second position.

As shown in FIG. 4, the panel unit 500 may have an approximate hexahedral shape extending long in left-right direction. The panel unit 500 may have a predetermined thickness, and may have a space therein for various components to be described below to be mounted.

When the panel unit 500 is located in the first position, the front surface of the panel unit 500 may be exposed in a direction towards the user, i.e., forwards.

A rear surface 551 of the panel unit 500 may face the control panel 530.

The panel unit 500 may be composed of a plurality of components. Based on the main housing 510 constituting the center portion of the panel unit 500, the control panel 530 may be disposed in the front side, and a cover frame (not assigned with reference numeral) may be disposed in the rear side. The rear surface 551 of the panel unit 500 may be understood as a surface of the cover frame.

As shown in FIG. 9, the air guide 590 may be provided at a lower portion of the panel unit 500. The air guide 590 may protrude further downwards from the lower portion of the panel unit 500. The air guide 590 may be connected to a lower surface of the main housing 510. As another example, the air guide 590 may be connected to a lower surface of the cover frame.

The air guide 590 may be disposed at the lower portion of the panel unit 500 to cover the exhaust port 282. The air guide 590 may be disposed in front of the exhaust port 282 to hide the exhaust port 282 from the user's view.

Furthermore, the air guide 590 may guide air discharged through the exhaust port 282 and the air discharged through the door exhaust port of the door frame to be efficiently discharged forwards without generating a vortex. The air guide 590 is exposed to the discharge air with high temperature, so it is preferable that the air guide 590 is made of a metal material with high durability.

The hinge modules 600 may be connected to the panel unit 500. The hinge modules 600 may connect the panel unit 500 and the casing 100, 200 to each other, so that the panel unit 500 may be moved between the first position and the second position.

As shown in FIG. 4, each of the hinge modules 600 may include a driving arm 620. A part of the driving arm 620 may be inserted into and removed out of each of the hinge modules 600. A first end of the driving arm 620 is connected to the internal portion of each of the hinge modules 600, and a second end of the driving arm 620 may be coupled to the panel unit 500.

The driving arm 620 may be moved forwards of each hinge module 600. Furthermore, the driving arm 620 may be moved downwards of each hinge module 600. As shown in the drawings, when the driving arm 620 is moved forwards and downwards, a total movement distance of the panel unit 500 may be increased. When a movement distance of the panel unit 500 is increased, the tank entrance may be exposed wider towards the user. In FIG. 4, reference numeral 670 is a wire cover, and a wire harness (not shown) connected to the panel unit 500 may be blocked by the wire cover 670.

A main panel unit 700 may be disposed at an upper portion of the inner casing 200 to control the cooking appliance. Furthermore, the door locking device 800 may be provided at an upper portion of the inner casing 200. The door locking device 800 may maintain a locked state of the door 300 so that the door 300 is not arbitrarily opened.

A part of the door locking device 800, more precisely, the latch (not shown) may protrude forwards through the front frame 280. The protruding latch may be caught by a fixing hole 379 formed in the upper frame 370. One end of the latch may protrude downwards, so that the latch may be inserted into the fixing hole 379. The door locking device 800 may be automatically operated through a motor.

A lighting module 900 may be disposed at the upper portion of the inner casing 200. The lighting module 900 emits light into the cavity S1, so that the user can observe the internal space of the cavity S1. The lighting module 900 may be disposed in the casing 100, 200. In the embodiment, the lighting module 900 may be disposed in the electric chamber S2.

The lighting module 900 may be disposed in the upper casing 240. The lighting module 900 may be directly disposed in the upper casing 240, or may be disposed in the guide duct 250 coupled to the upper casing 240. In the embodiment, the lighting module 900 may be disposed in the lighting coupling part (not shown) extending through the guide duct 250 to the upper casing 240. In FIG. 7, reference numeral 920 represents a lighting device such as an LED, a halogen lamp, etc. emitting light.

Although the preferred embodiments of the present disclosure have been described for illustrative purposes, those skilled in the art will appreciate that various modifications, additions and substitutions are possible, without departing from the scope of the present disclosure as disclosed in the accompanying claims. Therefore, the preferred embodiments described above have been described for illustrative purposes, and are not intended to limit the scope of the present disclosure.

For example, according to the present disclosure, the assembling structure of the door frame 360, 370, 380 and/or the structure of the drainage guide 385 may be applied to not only the cooking appliance but also, according to aspects not covered by the claims, to a dishwasher or other household appliance i.e. appliances that uses or generates steam in a cavity and have a door closing the cavity. Thus, all the aspects of the present disclosure described with respect to the cooking appliance may be implemented, according to aspects not covered by the claims, in any appliance/household appliance that includes a cavity and a door closing the cavity, and that uses and/or generates steam in the cavity or in which steam is generated.

## Claims

1. A cooking appliance comprising:
a casing (100, 200) having a cavity (S1) therein, wherein the cavity has an open front side; and
a door (300) disposed in front of the casing (100, 200) and configured to be movable between an open position and a closed position for opening and closing the cavity (S1), respectively, wherein the door (300) comprises a door frame and a panel part (320) supported by the door frame;
wherein the panel part (320) comprises a rear surface configured to be disposed at the open front side of the cavity (S1) for closing the cavity (S1) when the door is in the closed position, and wherein the door frame (360, 370, 380) comprises a pair of side frames (360), and a lower frame (380),
wherein the side frames (360) are spaced apart from each other and face each other and the lower frame (380) is disposed thereinbetween, and opposite ends of the lower frame (380) are respectively assembled to one side frame and the other side frame of the pair of side frames (360);
wherein:
the lower frame (380) includes a drainage guide (385) provided between the opposite ends of the lower frame (380) and below the rear surface of the panel part (320), wherein the drainage guide (385) extends towards a front surface of the casing (100, 200) and is inclined towards a lower portion of the front surface of the casing (100, 200),
**characterized in that**:
the lower frame (380) is configured to be slidingly coupled to the side frames (360),
wherein each of the side frames (360) includes a guide channel (GC), and the lower frame (380) comprises a moving guide (388) configured to move along the guide channel (GC), when the lower frame (380) is slid to be coupled to the side frames (360).

2. The cooking appliance of claim 1, wherein the drainage guide (385) is moveable along with a movement of the door (300), such that when the door (300) is in the closed position, the drainage guide (385) is farther from the front surface of the casing (100, 200) than the rear surface of the panel part (320) is from the front surface of the casing (100, 200), and when the door is in the open position, the drainage guide is below the rear surface of the panel part, and/or
wherein the drainage guide (385) includes a lowermost end (386) and an upper portion connecting the lowermost end (386) to the lower frame (380), and lowermost end (386) has an inclination lesser than an inclination of the upper portion of the drainage guide (385).

3. The cooking appliance of any one of the preceding claims, wherein the panel part (320) is a transparent part (320) for seeing therethrough the cavity (S1) from an outside of the cooking appliance and is composed of a plurality of panels (320A - 320D) stacked with each other, and the lower frame (380) is configured to support lower portions of at least one or more panels of the plurality of panels (320A - 320D).

4. The cooking appliance of claim 3 when depending on claim 2, wherein, the plurality of panels (320A - 320D) includes a rear panel (320D) disposed at a rearmost side, and
wherein the rear panel (320D) is disposed to be closer to the front surface of the casing (100, 200) than the lowermost end (386) of the drainage guide (385), when the door (300) is in the closed position, and
wherein the lowermost end (386) of the drainage guide (385) is disposed to be closer to the front surface of the casing (100, 200) than the rear panel (320D), when the door (300) is in the open position.

5. The cooking appliance of claim 3 or 4, wherein each of the side frames (360) includes:
a plurality of panel guides (365A - 365C), the panel guides (365A - 365C) spaced apart from each other, and wherein one or more panels of the plurality of panels (320A - 320D) are disposed between the panel guides (365A - 365C); and
a panel support (369) provided at a lower portion of each of the side frames (360) to support lower ends of the one or more panels of the plurality of panels (320A - 320D), the panel support (369) having a stepped shape to support at least two of the plurality of panels (320A - 320D) at different heights in a height direction of the door (300).

6. The cooking appliance of any one of the preceding claims, wherein each of the side frames (360) comprises the catching step (367) having a fixing end (367'), and
wherein the catching step (367) is configured to guide sliding movement of the lower frame (380) towards the fixing end (367') such that each end of the opposite ends of the lower frame (380) slides over the catching step (367) of the corresponding side frame (360), and is fixed by the fixing end (367');
- the lower frame includes a frame assembly (387) provided at each end of the opposite ends of the lower frame (380), wherein the frame assembly (387) is configured to be moved, during coupling of the lower frame (380) to the side frames (360), along a surface of each of the side frames (360), and the catching step (367) is disposed at each of the side frames (360), on a moving path of the frame assembly (387), and
wherein the frame assembly (387) is configured to be elastically deformed by the catching step (367) and restored after sliding past the catching step (367), and the restored frame assembly (387) is positioned facing the fixing end (367') of the catching step (367) and is fixed by the fixing end (367') of the catching step (367).

7. The cooking appliance of any one of the preceding claims, wherein the guide channel (GC) is configured to extend in a up-down direction, and
wherein the moving guide (388) is configured to move along the guide channel (GC) in the up-down direction.

8. The cooking appliance of claim 1, wherein the moving guide (388) is spaced apart from the frame assembly (387), and/or
each of the frame assembly (387) and the moving guide (388) has a cantilever structure protruding on each end of the opposite ends of the lower frame (380), and/or
wherein the drainage guide (385) extends towards a front surface of the casing (100, 200) and is inclined towards a lower portion of the front surface of the casing (100, 200).

9. The cooking appliance of any one of the preceding claims,-wherein the lower frame (380) is moved in a first direction to be brought into contact with a surface of each of the side frames (360), and configured to be slid over a catching step (367) provided at each of the side frames (360) while being moved in a second direction different from the first direction to be caught or fixed by a fixing end (367') of the catching step (367); and/or,
wherein a protruding height of the catching step (367) gradually increases in the second direction; and/or
wherein a guide channel (GC) is formed in each of the side frames (360) in the second direction, and a moving guide (388) of the lower frame (380) slides in the guide channel (GC) in the second direction.

10. The cooking appliance of any one of claims 7 to 9, wherein the guide channel (GC) has a channel entrance (363B') for inserting the moving guide (388) therethrough into the guide channel (GC), wherein the channel entrance is open in the first direction; and/or
wherein the moving guide (388) protrudes longer than a frame assembly (387), in a transverse width direction of the lower frame (380); and/or
wherein a frame assembly (387) and the moving guide (388) are different from each other in height along a height direction of the door (300).

11. The cooking appliance of any one of claims 7 to 10, wherein each of the side frames (360) has a side fence (363B), and the guide channel (GC) is formed between a surface of the side frame (360) and the side fence (363B).

12. The cooking appliance of claim 11 when depending on claim 3 and claim 10, wherein a rearmost panel (320D) among the plurality of panels (320A - 320D) is in close contact with a surface of the side fence (363B), and the channel entrance (363B') into which an end (386) of the moving guide (388) is inserted is formed in the side fence; and/or
wherein the side fence (363B) and another side fence of the pair of side frames (360), respectively, are disposed to face each other, and a distance between the moving guide (388) and another moving guide that are provided at the opposite ends of the lower frame (380) is larger than a distance between ends of the pair of side fences (363B).

13. The cooking appliance of any one of claims, wherein an assembly arm (387a) is configured to protrude in a direction of widening the left-right width of the lower frame (380),
wherein the moving guide (388) is configured to be disposed at a rear side closer to the cavity (S1) than the assembly arm (387a).

14. The cooking appliance of claim 13, wherein the moving guide (388) is configured to protrude in the same direction as the assembly arm (387a), and/or
wherein each of the side frames (360) comprises a front board (362) to which a rear surface of a front panel (320A) is coupled, the front panel (320A) being disposed at a foremost side among a plurality of panels (320A - 320D), the moving guide (388) is configured to be mounted to the guide channel (GC), and the assembly arm (387a) is configured to be in contact with the front board (362), and/or
wherein the moving guide (388) is configured to protrude longer than the assembly arm (387a), and/or
wherein the moving guide 388 is configured to be disposed relatively higher than the assembly arm (387a).

15. The cooking appliance of any one of the preceding claims,
wherein the lower frame (380) comprises a frame assembly (387) comprising a frame assembly hole (387b), and each of the side frames (360) comprises an assembly protrusion configured to be inserted into the frame assembly hole (387b); and/or
wherein the lower frame (380) comprises a frame assembly (387) provided at each of the opposite ends of the lower frame (380) and configured to couple the lower frame (380) to the side frame (360), and the drainage guide (385) is disposed between the pair of frame assemblies (387).

## Patentansprüche

1. Garvorrichtung, die Folgendes umfasst:
ein Gehäuse (100, 200), in dem ein Hohlraum (S1) ausgebildet ist, wobei der Hohlraum eine offene Vorderseite besitzt; und
eine Tür (300), die an der Vorderseite des Gehäuses (100, 200 angeordnet ist und so konfiguriert ist, dass sie zwischen einer offenen Position und einer geschlossenen Position zum Öffnen bzw. Verschließen des Hohlraums (S1) beweglich ist, wobei die Tür (300) einen Türrahmen und eine Plattenkomponente (320), die durch den Türrahmen getragen wird, umfasst;
wobei die Plattenkomponente (320) eine hintere Fläche aufweist, die konfiguriert ist, an der offenen Vorderseite des Hohlraums (S1) angeordnet zu sein, um den Hohlraum (S1) zu verschließen, wenn sich die Tür in der geschlossenen Position befindet, und wobei der Türrahmen (360, 370, 380) ein Paar Seitenrahmen (360) und einen unteren Rahmen (380) umfasst,
wobei die Seitenrahmen (360) voneinander beabstandet sind und einander zugewandt sind und der untere Rahmen (380) dazwischen angeordnet ist und die gegenüberliegenden Enden des unteren Rahmens (380) jeweils an einem Seitenrahmen und an dem anderen Seitenrahmen des Paares Seitenrahmen (360) angebaut sind;
wobei:
der untere Rahmen (380) eine Ablaufführung (385) enthält, die zwischen den gegenüberliegenden Enden des unteren Rahmens (380) und unter der hinteren Fläche der Plattenkomponente (320) vorgesehen ist, wobei sich die Ablaufführung (385) zu einer vorderen Fläche des Gehäuses (100, 200) erstreckt und in Richtung eines unteren Abschnitts der vorderen Fläche des Gehäuses (100, 200) geneigt ist,
**dadurch gekennzeichnet, dass**:
der untere Rahmen (380) konfiguriert ist, mit den Seitenrahmen (360) gleitend gekoppelt zu sein,
wobei die Seitenrahmen (360) jeweils einen Führungskanal (GC) enthalten und der untere Rahmen (380) eine bewegliche Führung (388) umfasst, die konfiguriert ist, sich entlang des Führungskanals (GC) zu bewegen, wenn der untere Rahmen (380) geschoben wird, um mit den Seitenrahmen (360) gekoppelt zu werden.

2. Garvorrichtung nach Anspruch 1, wobei die Ablaufführung (385) zusammen mit einer Bewegung der Tür (300) beweglich ist, derart, dass dann, wenn sich die Tür (300) in der geschlossenen Position befindet, die Ablaufführung (385) weiter von der vorderen Fläche des Gehäuses (100, 200) entfernt ist als die hintere Fläche der Plattenkomponente (320) von der vorderen Fläche des Gehäuses (100, 200) entfernt ist, und dann, wenn sich die Tür in der offenen Position befindet, die Ablaufführung sich unter der hinteren Fläche der Plattenkomponente befindet, und/oder
wobei die Ablaufführung (385) ein unterstes Ende (386) und einen oberen Abschnitt, der das unterste Ende (386) mit dem unteren Rahmen (380) verbindet, enthält und das unterste Ende (386) eine Neigung aufweist, die kleiner als eine Neigung des oberen Abschnitts der Ablaufführung (385) ist.

3. Garvorrichtung nach einem der vorhergehenden Ansprüche, wobei die Plattenkomponente (320) eine durchsichtige Komponente (320) ist, um den Hohlraum (S1) von einer Außenseite der Garvorrichtung durch sie hindurch zu betrachten, und aus mehreren Platten (320A-320D) zusammengesetzt ist, die miteinander geschichtet sind, und der untere Rahmen (380) konfiguriert ist, die unteren Abschnitte von mindestens einer oder mehreren Platten der mehreren Platten (320A-320D) zu tragen.

4. Garvorrichtung nach Anspruch 3, wenn abhängig von Anspruch 2, wobei die mehreren Platten (320A-320D) eine hintere Platte (320D) umfassen, die an einer hintersten Seite angeordnet ist, und
wobei die hintere Platte (320D) derart angeordnet ist, dass sie sich näher als das unterste Ende (386) der Ablaufführung (385) an der vorderen Fläche des Gehäuses (100, 200) befindet, wenn sich die Tür (300) in der geschlossenen Position befindet, und
wobei das unterste Ende (386) der Ablaufführung (385) so angeordnet ist, dass es sich näher als die hintere Platte (320D) an der vorderen Fläche des Gehäuses (100, 200) befindet, wenn sich die Tür (300) in der offenen Position befindet.

5. Garvorrichtung nach Anspruch 3 oder 4, wobei die Seitenrahmen (360) jeweils Folgendes umfassen:
mehrere Plattenführungen (365A-365C), wobei die Plattenführungen (365A-365C) voneinander beabstandet sind und wobei eine oder mehrere Platten der mehreren Platten (320A-320D) zwischen den Plattenführungen (365A-365C) angeordnet sind; und
einen Plattenträger (369), der an einem unteren Abschnitt jedes der Seitenrahmen (360) vorgesehen ist, um die unteren Enden der einen oder der mehreren Platten der mehreren Platten (320A-320D) zu tragen, wobei der Plattenträger (369) eine gestufte Form aufweist, um mindestens zwei der mehreren Platten (320A-320D) in verschiedenen Höhen in einer Höhenrichtung der Tür (300) zu tragen.

6. Garvorrichtung nach einem der vorhergehenden Ansprüche, wobei jeder der Seitenrahmen (360) die Arretierungsstufe (367) mit einem Befestigungsende (367') umfasst, und
wobei die Arretierungsstufe (367) konfiguriert ist, eine Gleitbewegung des unteren Rahmens (380) in Richtung des Befestigungsendes (367') zu führen, derart, dass jedes Ende der gegenüberliegenden Enden des unteren Rahmens (380) über die Arretierungsstufe (367) des entsprechenden Seitenrahmens (360) gleitet und durch das Befestigungsende (367') befestigt wird;
- wobei der untere Rahmen eine Rahmenanordnung (387) enthält, die an jedem Ende der gegenüberliegenden Enden des unteren Rahmens (380) vorgesehen ist, wobei die Rahmenanordnung (387) konfiguriert ist, während des Koppelns des unteren Rahmens (380) mit den Seitenrahmen (360) entlang einer Fläche jedes der Seitenrahmen (360) bewegt zu werden, und die Arretierungsstufe (367) an jedem der Seitenrahmen (360) auf einem Bewegungsweg der Rahmenanordnung (387) angeordnet ist, und
wobei die Rahmenanordnung (387) konfiguriert ist, durch die Arretierungsstufe (367) elastisch verformt und nach dem Gleiten über die Arretierungsstufe (367) hinaus wiederhergestellt zu werden, und die wiederhergestellte Rahmenanordnung (387) derart angeordnet ist, dass sie dem Befestigungsende (367') der Arretierungsstufe (367) zugewandt ist, und durch das Befestigungsende (367') der Arretierungsstufe (367) befestigt wird.

7. Garvorrichtung nach einem der vorhergehenden Ansprüche, wobei der Führungskanal (GC) konfiguriert ist, sich in einer Oben/Unten-Richtung zu erstrecken, und
wobei die bewegliche Führung (388) konfiguriert ist, sich entlang des Führungskanals (GC) in der Oben/Unten-Richtung zu bewegen.

8. Garvorrichtung nach Anspruch 1, wobei die bewegliche Führung (388) von der Rahmenanordnung (387) beabstandet ist, und/oder
die Rahmenanordnung (387) und die bewegliche Führung (388) jeweils eine freitragende Struktur aufweisen, die auf jedem Ende der gegenüberliegenden Enden des unteren Rahmens (380) vorsteht, und/oder
wobei sich die Ablaufführung (385) zu einer vorderen Fläche des Gehäuses (100, 200) erstreckt und in Richtung eines unteren Abschnitts der vorderen Fläche des Gehäuses (100, 200) geneigt ist.

9. Garvorrichtung nach einem der vorhergehenden Ansprüche, wobei der untere Rahmen (380) in einer ersten Richtung bewegt wird, um mit einer Fläche von jedem der Seitenrahmen (360) in Kontakt gebracht zu werden, und konfiguriert ist, über eine Arretierungsstufe (367) geschoben zu werden, die an jedem der Seitenrahmen (360) vorgesehen ist, während er in einer zweiten Richtung bewegt wird, die von der ersten Richtung verschieden ist, damit er durch ein Befestigungsende (367') der Arretierungsstufe (367) arretiert oder befestigt wird; und/oder
wobei eine Vorstehhöhe der Arretierungsstufe (367) in der zweiten Richtung allmählich zunimmt; und/oder
wobei ein Führungskanal (GC) in jedem der Seitenrahmen (360) in der zweiten Richtung gebildet ist und eine bewegliche Führung (388) des unteren Rahmens (380) im Führungskanal (GC) in der zweiten Richtung gleitet.

10. Garvorrichtung nach einem der Ansprüche 7 bis 9, wobei der Führungskanal (GC) einen Kanaleingang (363B') zum Einführen der beweglichen Führung (388) dort hindurch in den Führungskanal (GC) aufweist, wobei der Kanaleingang in der ersten Richtung offen ist; und/oder
wobei die bewegliche Führung (388) länger als eine Rahmenanordnung (387) in einer querverlaufenden Breitenrichtung des unteren Rahmens (380) vorsteht; und/oder
wobei eine Rahmenanordnung (387) und die bewegliche Führung (388) bezüglich der Höhe in einer Höhenrichtung der Tür (300) voneinander verschieden sind.

11. Garvorrichtung nach einem der Ansprüche 7 bis 10, wobei jeder der Seitenrahmen (360) eine Seiteneinfassung (363B) aufweist und der Führungskanal (GC) zwischen einer Fläche des Seitenrahmens (360) und der Seiteneinfassung (363B) gebildet ist.

12. Garvorrichtung nach Anspruch 11, wenn abhängig von Anspruch 3 und Anspruch 10, wobei sich eine hinterste Platte (320D) der mehreren Platten (320A-320D) in engem Kontakt mit einer Fläche der Seiteneinfassung (363B) befindet und der Kanaleingang (363B'), in den ein Ende der beweglichen Führung (388) eingeführt wird, in der Seiteneinfassung gebildet ist; und/oder
wobei die Seiteneinfassung (363B) und eine weitere Seiteneinfassung jeweils des Paares der Seitenrahmen (360) derart angeordnet sind, dass sie einander zugewandt sind, und ein Abstand zwischen der beweglichen Führung (388) und einer weiteren beweglichen Führung, die an den gegenüberliegenden Enden des unteren Rahmens (380) vorgesehen sind, größer als ein Abstand zwischen den Enden des Paares der Seiteneinfassungen (363B) ist.

13. Garvorrichtung nach einem der vorhergehenden Ansprüche, wobei ein Montagearm (387a) so konfiguriert ist, dass er in einer Richtung des Aufweitens der Breite von links nach rechts des unteren Rahmens (380) vorsteht,
wobei die bewegliche Führung (388) so konfiguriert ist, dass er sich an einer Rückseite näher beim Hohlraum (S1) befindet als der Montagearm (387a).

14. Garvorrichtung nach Anspruch 13, wobei die bewegliche Führung (388) konfiguriert ist, in derselben Richtung wie der Montagearm (387a) vorzustehen, und/oder
wobei jeder der Seitenrahmen (360) eine vordere Platte (362) umfasst, mit der eine hintere Fläche einer vorderen Platte (320A) gekoppelt ist, wobei die vordere Platte (320A) an einer vordersten Seite der mehreren Platten (320A-320D) angeordnet ist, wobei die bewegliche Führung (388) konfiguriert ist, auf dem Führungskanal (GC) angebracht zu sein und der Montagearm (387a) konfiguriert ist, sich mit der vorderen Platte (362) in Kontakt zu befinden, und/oder
wobei die bewegliche Führung (388) konfiguriert ist, länger als der Montagearm (387a) vorzustehen, und/oder
wobei die bewegliche Führung (388) konfiguriert ist, relativ höher als der Montagearm (387a) angeordnet zu sein.

15. Garvorrichtung nach einem der vorhergehenden Ansprüche,
wobei der untere Rahmen (380) eine Rahmenanordnung (387) umfasst, die ein Rahmenanordnungsloch (387b) umfasst, und die Seitenrahmen (360) jeweils einen Montagevorsprung umfassen, der konfiguriert ist, in das Rahmenmontageloch (387b) eingesetzt zu werden; und/oder
wobei der untere Rahmen (380) eine Rahmenanordnung (387) umfasst, die an jedem der gegenüberliegenden Enden des unteren Rahmens (380) vorgesehen sind und konfiguriert sind, den unteren Rahmen (380) mit dem Seitenrahmen (360) zu koppeln, und die Ablaufführung (385) zwischen dem Paar der Rahmenanordnungen (387) angeordnet ist.

## Revendications

1. Appareil de cuisson comportant :
une enveloppe (100, 200) ayant une cavité (S1) dans celle-ci, dans laquelle la cavité a un côté avant ouvert ; et
une porte (300) disposée à l'avant de l'enveloppe (100, 200) et configurée pour être déplacée entre une position ouverte et une position fermée pour ouvrir et fermer la cavité (S1), respectivement, dans lequel la porte (300) comporte un châssis de porte et une partie de panneau (320) supportée par le châssis de porte ;
dans lequel la partie de panneau (320) comporte une surface arrière configurée pour être disposée sur le côté avant ouvert de la cavité (S1) pour fermer la cavité (S1) lorsque la porte est dans la position fermée, et dans lequel le châssis de porte (360, 370, 380) comporte une paire de châssis latéraux (360) et un châssis inférieur (380),
dans lequel les châssis latéraux (360) sont espacés l'un de l'autre et sont dirigés l'un vers l'autre et le châssis inférieur (380) est disposé entre ceux-ci, et des extrémités opposées du châssis inférieur (380) sont respectivement assemblées à un châssis latéral et à l'autre châssis latéral de la paire de châssis latéraux (360) ;
dans lequel :
le châssis inférieur (380) inclut un guide d'évacuation (385) agencé entre les extrémités opposées du châssis inférieur (380) et sous la surface arrière de la partie de panneau (320), dans lequel le guide d'évacuation (385) s'étend vers une surface avant de l'enveloppe (100, 200) et est incliné vers une partie inférieure de la surface avant de l'enveloppe (100, 200),
**caractérisé en ce que** :
le châssis inférieur (380) est configuré pour être couplé aux châssis latéraux (360) de manière glissante,
dans lequel chacun des châssis latéraux (360) inclut un canal de guidage (GC), et le châssis inférieur (380) comporte un guide de déplacement (388) configuré pour se déplacer le long du canal de guidage (GC), lorsque le châssis inférieur (380) est glissé pour être couplé aux châssis latéraux (360).

2. Appareil de cuisson selon la revendication 1, dans lequel le guide d'évacuation (385) peut être déplacé avec un mouvement de la porte (300), de telle sorte que lorsque la porte (300) est dans la position fermée, le guide d'évacuation (385) est plus éloigné de la surface avant de l'enveloppe (100, 200) que la surface arrière de la partie de panneau (320) ne l'est de la surface avant de l'enveloppe (100, 200), et lorsque la porte est dans la position ouverte, le guide d'évacuation est sous la surface arrière de la partie de panneau, et/ou
dans lequel le guide d'évacuation (385) inclut une extrémité la plus basse (386) et une portion supérieure reliant l'extrémité la plus basse (386) au châssis inférieur (380), et l'extrémité la plus basse (386) a une inclinaison inférieure à une inclinaison de la portion supérieure du guide d'évacuation (385).

3. Appareil de cuisson selon l'une quelconque des revendications précédentes, dans lequel la partie de panneau (320) est une partie transparente (320) pour voir à travers elle la cavité (S1) depuis un extérieur de l'appareil de cuisson et est composée d'une pluralité de panneaux (320A - 320D) empilés les uns avec les autres, et le châssis inférieur (380) est configuré pour supporter des portions inférieures d'au moins un ou plusieurs panneaux de la pluralité de panneaux (320A - 320D).

4. Appareil de cuisson selon la revendication 3 lorsque dépendante de la revendication 2, dans lequel la pluralité de panneaux (320A-320D) inclut un panneau arrière (320D) disposé sur un côté le plus en arrière, et
dans lequel le panneau arrière (320D) est disposé de manière à être plus près de la surface avant de l'enveloppe (100, 200) que l'extrémité la plus basse (386) du guide d'évacuation (385), lorsque la porte (300) est dans la position fermée, et
dans lequel l'extrémité la plus basse (386) du guide d'évacuation (385) est disposée de manière à être plus près de la surface avant de l'enveloppe (100, 200) que le panneau arrière (320D), lorsque la porte (300) est dans la position ouverte.

5. Appareil de cuisson selon la revendication 3 ou 4, dans lequel chacun des châssis latéraux (360) inclut :
une pluralité de guides de panneaux (365A - 365C), les guides de panneaux (365A - 365C) étant espacés les uns des autres, et dans lequel un ou plusieurs panneaux de la pluralité de panneaux (320A - 320D) sont disposés entre les guides de panneaux (365A - 365C) ; et
un support de panneaux (369) agencé sur une portion inférieure de chacun des châssis latéraux (360) pour supporter des extrémités inférieures du ou des panneaux de la pluralité de panneaux (320A - 320D), le support de panneaux (369) ayant une forme étagée pour supporter au moins deux panneaux de la pluralité de panneaux (320A - 320D) à différentes hauteurs dans une direction de hauteur de la porte (300).

6. Appareil de cuisson selon l'une quelconque des revendications précédentes, dans lequel chacun des châssis latéraux (360) comporte le gradin de prise (367) ayant une extrémité de fixation (367'), et
dans lequel le gradin de prise (367) est configuré pour guider un mouvement de glissement du châssis inférieur (380) vers l'extrémité de fixation (367') de telle sorte que chaque extrémité des extrémités opposées du châssis inférieur (380) glisse sur le gradin de prise (367) du châssis latéral (360) correspondant, et est fixée par l'extrémité de fixation (367') ;
- le châssis inférieur inclut un élément d'assemblage de châssis (387) agencé à chaque extrémité des extrémités opposées du châssis inférieur (380), dans lequel l'élément d'assemblage de châssis (387) est configuré pour être déplacé, pendant un couplage du châssis inférieur (380) aux châssis latéraux (360), le long d'une surface de chacun des châssis latéraux (360), et le gradin de prise (367) est disposé sur chacun des châssis latéraux (360), sur un trajet de déplacement de l'élément d'assemblage de châssis (387), et
dans lequel l'élément d'assemblage de châssis (387) est configuré pour être élastiquement déformé par le gradin de prise (367) et rappelé après glissement au-delà du gradin de prise (367), et l'élément d'assemblage de châssis (387) rappelé est positionné face à l'extrémité de fixation (367') du gradin de prise (367) et est fixé par l'extrémité de fixation (367') du gradin de prise (367).

7. Appareil de cuisson selon l'une quelconque des revendications précédentes, dans lequel le canal de guidage (GC) est configuré pour s'étendre dans une direction vers le haut-bas, et
dans lequel le guide de déplacement (388) est configuré pour se déplacer le long du canal de guidage (GC) dans la direction vers le haut-bas.

8. Appareil de cuisson selon la revendication 1, dans lequel le guide de déplacement (388) est espacé de l'élément d'assemblage de châssis (387), et/ou
chaque élément parmi l'élément d'assemblage de châssis (387) et le guide de déplacement (388) a une structure en porte-à-faux faisant saillie sur chaque extrémité des extrémités opposées du châssis inférieur (380), et/ou
dans lequel le guide d'évacuation (385) s'étend vers une surface avant de l'enveloppe (100, 200) et est incliné vers une portion inférieure de la surface avant de l'enveloppe (100, 200).

9. Appareil de cuisson selon l'une quelconque des revendications précédentes, dans lequel le châssis inférieur (380) est déplacé dans une première direction pour être mis en contact avec une surface de chacun des châssis latéraux (360), et configuré pour être glissé sur un gradin d'accrochage (367) agencé sur chacun des châssis latéraux (360) tout en étant déplacé dans une seconde direction différente de la première direction pour être attrapé ou fixé par une extrémité de fixation (367') du gradin d'accrochage (367) ; et/ou,
dans lequel une hauteur de saillie du gradin de prise (367) augmente graduellement dans la seconde direction ; et/ou
dans lequel un canal de guidage (GC) est formé dans chacun des châssis latéraux (360) dans la seconde direction, et un guide de déplacement (388) du châssis inférieur (380) glisse dans le canal de guidage (GC) dans la seconde direction.

10. Appareil de cuisson selon l'une quelconque des revendications 7 à 9, dans lequel le canal de guidage (GC) a une entrée de canal (363B') pour insérer le guide de déplacement (388) à travers celle-ci dans le canal de guidage (GC), dans lequel l'entrée de canal est ouverte dans la première direction ; et/ou
dans lequel le guide de déplacement (388) fait saillie plus loin qu'un élément d'assemblage de châssis (387), dans une direction de largeur transversale du châssis inférieur (380), et/ou
dans lequel un élément d'assemblage de châssis (387) et le guide de déplacement (388) sont différents l'un de l'autre en hauteur le long d'une direction de hauteur de la porte (300).

11. Appareil de cuisson selon l'une quelconque des revendications 7 à 10, dans lequel chacun des châssis latéraux (360) a une barrière latérale (363B), et le canal de guidage (GC) est formé entre une surface du châssis latéral (360) et la barrière latérale (363B).

12. Appareil de cuisson selon la revendication 11 lorsque dépendante de la revendication 3 et de la revendication 10, dans lequel le panneau le plus en arrière (320D) parmi la pluralité de panneaux (320A - 320D) est en contact direct avec une surface de la barrière latérale (363B), et l'entrée de canal (363B') dans laquelle une extrémité (386) du guide de déplacement (388) est insérée, est formée dans la barrière latérale ; et/ou
dans lequel la barrière latérale (363B) et une autre barrière latérale de la paire de châssis latéraux (360), respectivement, sont disposées l'une en face de l'autre, et une distance entre le guide de déplacement (388) et un autre guide de déplacement qui sont agencés aux extrémités opposées du châssis inférieur (380) est plus grande qu'une distance entre des extrémités de la paire de barrières latérales (363B).

13. Appareil de cuisson selon l'une quelconque des revendications, dans lequel un bras d'assemblage (387a) est configuré pour faire saillie dans une direction d'élargissement de la largeur gauche-droite du châssis inférieur (380),
dans lequel le guide de déplacement (388) est configuré pour être disposé sur un côté arrière plus près de la cavité (S1) que le bras d'assemblage (387a).

14. Appareil de cuisson selon la revendication 13, dans lequel le guide de déplacement (388) est configuré pour faire saillie dans la même direction que le bras d'assemblage (387a), et/ou
dans lequel chacun des châssis latéraux (360) comporte une plaque avant (362) à laquelle une surface arrière d'un panneau avant (320A) est couplée, le panneau avant (320A) étant disposé sur un côté le plus en avant parmi une pluralité de panneaux (320A - 320D), le guide de déplacement (388) est configuré pour être monté sur le canal de guidage (GC), et le bras d'assemblage (387a) est configuré pour être en contact avec la plaque avant (362), et/ou
dans lequel le guide de déplacement (388) est configuré pour faire saillie plus loin que le bras d'assemblage (387a), et/ou
dans lequel le guide de déplacement (388) est configuré pour être disposé relativement plus haut que le bras d'assemblage (387a).

15. Appareil de cuisson selon l'une quelconque des revendications précédentes,
dans lequel le châssis inférieur (380) comporte un élément d'assemblage de châssis (387) comportant un trou d'élément d'assemblage de châssis (387), et chacun des châssis latéraux (360) comporte une saillie d'assemblage configurée pour être insérée dans le trou d'élément d'assemblage de châssis (387) ; et/ou
dans lequel le châssis inférieur (380) comporte un élément d'assemblage de châssis (387) agencé à chacune des extrémités opposées du châssis inférieur (380) et configuré pour coupler le châssis inférieur (380) au châssis latéral (360), et le guide d'évacuation (385) est disposé entre la paire d'éléments d'assemblage de châssis (387).
